# EUROPEAN PATENT APPLICATION

(11) **EP 4 841 715 A1**
(43) Date of publication of application: **18.11.2026**
(21) Application number: 24944326.8
(22) Date of filing: 05.11.2024
(51) Int. Cl.: H01M 4/62, C08F 251/02, C08F 220/56, C08F 220/54, C08F 220/14, H01M 10/0525

(54) **MODIFIED CARBOXYMETHYL CELLULOSE SALT, NEGATIVE ELECTRODE DISPERSANT, NEGATIVE ELECTRODE SHEET, BATTERY CELL, BATTERY, AND ELECTRIC DEVICE**

(30) Priority: 24.06.2024 CN 202410825817
(71) Applicant: Contemporary Amperex Technology Co., Limited, Ningde, Fujian 352100 (CN)
(72) Inventor: CHAI, Siyu, Ningde, Fujian 352100 (CN); WANG, Ning, Ningde, Fujian 352100 (CN)
(74) Representative: Kraus & Lederer PartGmbB
(86) International application number: PCT/CN2024/129842
(87) International publication number: WO 2026/000759

(57) **Abstract**

A modified carboxymethyl cellulose salt, a negative electrode dispersant, a negative electrode sheet, a battery cell, a battery, and an electric device. The battery cell comprises a negative electrode sheet; the negative electrode sheet comprises a negative electrode current collector and a negative electrode film layer provided on at least one side of the negative electrode current collector; the negative electrode film layer comprises a negative electrode active material and a negative electrode dispersant; the negative electrode dispersant comprises a modified carboxymethyl cellulose salt, the modified carboxymethyl cellulose salt comprises a conductive group and a flexible group; the flexible group comprises at least one of a substituted or unsubstituted ether group, a substituted or unsubstituted alkyl group, a substituted or unsubstituted polyolefin group, a substituted or unsubstituted amide group, and a substituted or unsubstituted ester group. The negative electrode film layer has good flexibility, is not prone to cracking, and has good electrical conductivity.

## Description

### CROSS-REFERENCE TO RELATED APPLICATIONS

The present application claims priority to Chinese Patent Application No. 202410825817.6, entitled "MODIFIED CARBOXYMETHYL CELLULOSE SALT, NEGATIVE ELECTRODE DISPERSANT, NEGATIVE ELECTRODE SHEET, BATTERY CELL, BATTERY, AND ELECTRIC DEVICE" and filed on June 24, 2024, which is incorporated herein by reference in its entirety.

### TECHNICAL FIELD

The present application relates to a modified carboxymethyl cellulose salt, a negative electrode dispersant, a negative electrode sheet, a battery cell, a battery, and an electric device.

### BACKGROUND

Battery cells have the advantages of reliable operating performance, no pollution, no memory effect, and the like, and are therefore widely used. For example, as environmental protection concerns grow and new-energy vehicles become more popular, the demand for power-type battery cells is expected to experience explosive growth.

As the application range of batteries becomes more and more extensive, the requirements for battery performance become increasingly stringent. However, during the preparation of negative electrode sheets, the negative electrode sheets have a risk of cracking, causing the performance of the negative electrode sheets to fail to meet production requirements.

### SUMMARY

The present application provides a modified carboxymethyl cellulose salt, a negative electrode dispersant, a negative electrode sheet, a battery cell, a battery, and an electric device. The negative electrode sheet of the battery cell described in the present application has good flexibility, is not prone to cracking, and has good electrical conductivity.

According to a first aspect, the present application provides a battery cell. The battery cell includes a negative electrode sheet. The negative electrode sheet includes a negative electrode current collector and a negative electrode film layer provided on at least one side of the negative electrode current collector. The negative electrode film layer includes a negative electrode active material and a negative electrode dispersant. The negative electrode dispersant includes a modified carboxymethyl cellulose salt. The modified carboxymethyl cellulose salt includes a conductive group and a flexible group. The flexible group includes at least one of a substituted or unsubstituted ether group, a substituted or unsubstituted alkyl group, a substituted or unsubstituted polyolefin group, a substituted or unsubstituted amide group, and a substituted or unsubstituted ester group.

Therefore, the negative electrode dispersant according to the embodiments of the present application includes the modified carboxymethyl cellulose salt. The modified carboxymethyl cellulose salt includes a flexible group. The flexible group weakens the interaction force between the molecular chains of the modified carboxymethyl cellulose salt, improves the flexibility of the polymer molecular chains, and can impart excellent flexibility to the negative electrode film layer, reduce the risk of cracking of the negative electrode film layer, particularly reduce the risk of cracking of a negative electrode film layer with a heavy coating weight, and increase the energy density of the battery cell. Further, the flexible group has excellent flexibility, can further improve the flexibility of the modified carboxymethyl cellulose salt, and further improve the flexibility of the negative electrode film layer.

The modified carboxymethyl cellulose salt further includes a conductive group. The conductive group has a high electronic conductivity, can improve the conductivity of the modified carboxymethyl cellulose salt, and improve the conductivity of the negative electrode film layer.

Moreover, the modified carboxymethyl cellulose salt has good dispersing and leveling effects, and can effectively disperse the negative electrode active material, so that the negative electrode active material is uniformly dispersed, and the negative electrode film layer has a uniform thickness distribution and uniform performance.

Therefore, when the negative electrode film layer includes the modified carboxymethyl cellulose salt, the flexibility of the negative electrode film layer is improved, the risk of cracking is low, and the negative electrode film layer has a uniform thickness and uniform performance.

In some embodiments, the modified carboxymethyl cellulose salt includes a compound represented by formula A, 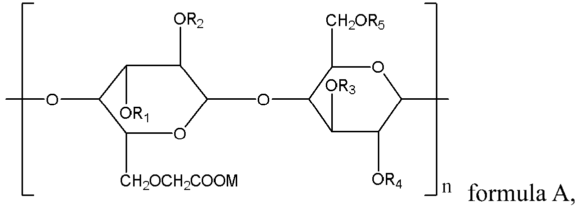
where in formula A,
M includes at least one of a metal ion or NH₄⁺;
R₁ to R₅ each independently include a hydrogen atom, a conductive group, or a flexible group, at least one of R₁ to R₅ includes a conductive group, and at least another one thereof includes a flexible group; and
n includes any positive integer from 1500 to 3000.

Therefore, the above materials in the embodiments of the present application have good dispersibility, and since the modified carboxymethyl cellulose salt further includes a conductive group and a flexible group, the negative electrode film layer has uniform performance, is not prone to cracking, and has excellent conductivity.

In some embodiments, the conductive group includes one or more of an aromatic polymer group and a polyalkynyl group. The above groups have excellent conductivity and can improve the conductivity of the negative electrode film layer.

In some embodiments, the aromatic polymer group includes one or more of a five-membered heterocyclic polymer group, an aromatic hydrocarbon derivative polymer group, and a polyindolyl group.

In some embodiments, the five-membered heterocyclic polymer group includes one or more of a polypyrrolyl group, a polythiophene-based group, and a polyfuranyl group;

In some embodiments, the aromatic hydrocarbon derivative polymer group includes one or more of a polyacenyl group, a polyphenylene group, a polyphenylenevinylene group, a polyaniline group, and an aniline tetramer group.

In some embodiments, the polyalkynyl group includes one or more of a polyacetylenyl group and a polydiacetylenyl group. The above polyalkynyl group has good flexibility, which is beneficial for further improving the flexibility of the negative electrode dispersant; and can improve the conductivity of the negative electrode dispersant.

In some embodiments, the aromatic polymer group has a degree of polymerization of 2 to 50.

In some embodiments, the polyalkynyl group has a degree of polymerization of 2 to 50.

In some embodiments, the flexible group includes at least one of a substituted or unsubstituted C3 to C150 ether group, a substituted or unsubstituted C3 to C150 alkyl group, a substituted or unsubstituted C3 to C150 polyolefin group, a substituted or unsubstituted C3 to C150 amide group, and a substituted or unsubstituted C3 to C150 ester group. The above groups have excellent flexibility and can improve the flexibility of the negative electrode film layer.

In some embodiments, the substituted or unsubstituted C3 to C150 ether group includes a structural formula represented by formula 1, 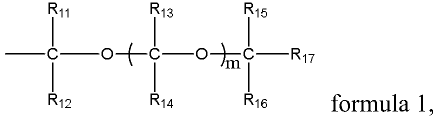
where in formula 1,
R₁₁ to R₁₇ each independently include at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group; and
m includes any positive integer from 5 to 60.

Therefore, the ether group in the embodiments of the present application can increase flexibility, thereby increasing the flexibility of the modified carboxymethyl cellulose salt.

In some embodiments, the substituted or unsubstituted C3 to C150 ether group includes at least one of structural formulas represented by formula 1-1 to formula 1-14, 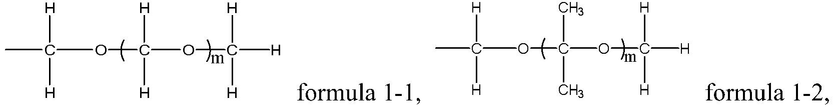 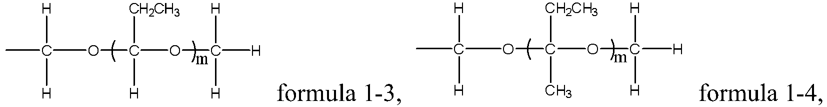 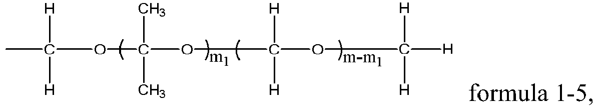 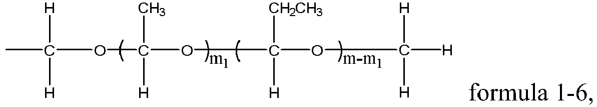 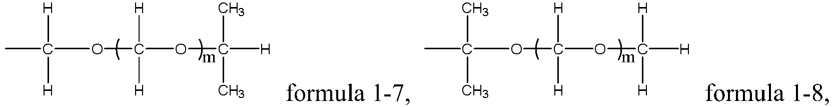 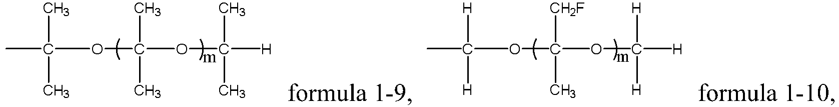 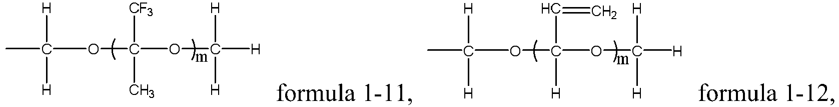 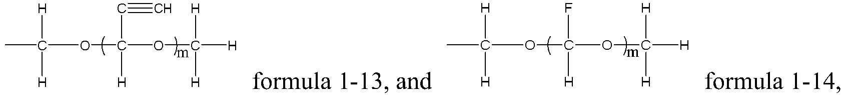 where m₁ includes any positive integer from 1 to 30.

In some embodiments, the substituted or unsubstituted C3 to C150 alkyl group includes a structural formula represented by formula 2, 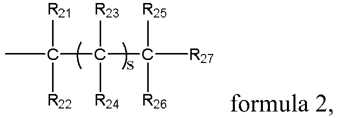
where in formula 2,
R₂₁ to R₂₇ each independently include at least one of a hydrogen atom, a halogen atom, and a substituted or unsubstituted C1 to C10 alkyl group; and
s includes any positive integer from 5 to 60.

Therefore, the alkyl group in the embodiments of the present application can increase flexibility, thereby increasing the flexibility of the modified carboxymethyl cellulose salt.

In some embodiments, the substituted or unsubstituted C3 to C150 alkyl group includes at least one of structural formulas represented by formula 2-1 to formula 2-11, 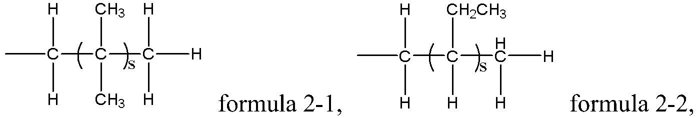 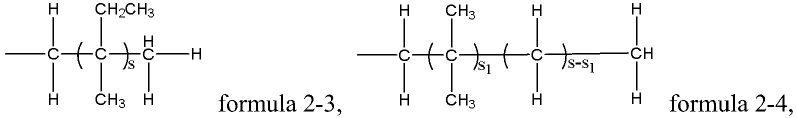 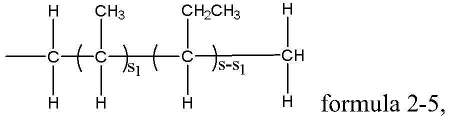 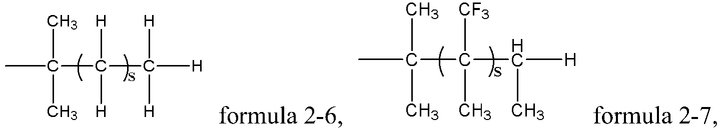 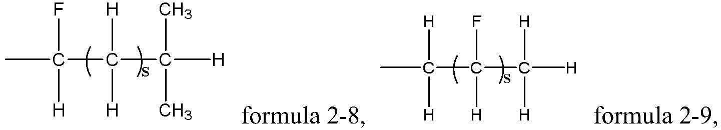 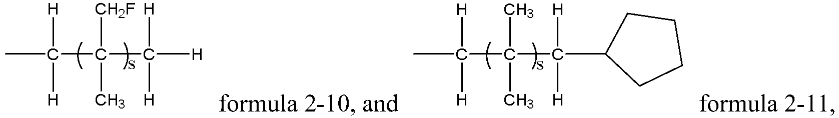 where s₁ includes any positive integer from 1 to 30.

In some embodiments, the substituted or unsubstituted C3 to C150 polyolefin group includes a structural formula represented by formula 3, 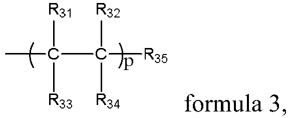
where in formula 3,
R₃₁ to R₃₄ each independently include at least one of a hydrogen atom, a halogen atom, a substituted or unsubstituted C1 to C10 alkyl group, and a substituted or unsubstituted C2 to C10 alkenyl group;
R₃₅ includes at least one of a hydrogen atom, a halogen atom, and a substituted or unsubstituted C1 to C10 alkyl group; and
p includes any positive integer from 5 to 60.

Therefore, the polyolefin group in the embodiments of the present application can increase flexibility, thereby increasing the flexibility of the modified carboxymethyl cellulose salt.

In some embodiments, the substituted or unsubstituted C3 to C150 polyolefin group includes at least one of structural formulas represented by formula 3-1 to formula 3-8,

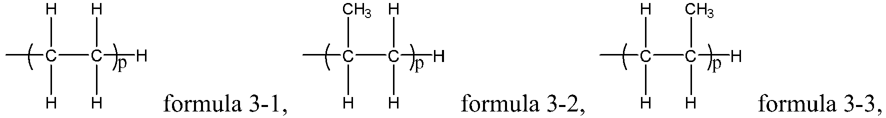

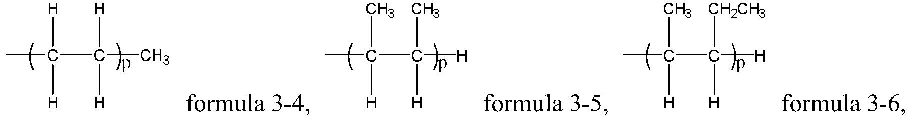

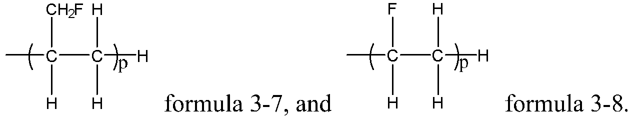

In some embodiments, the substituted or unsubstituted C3 to C150 amide group includes a structural formula represented by formula 4, 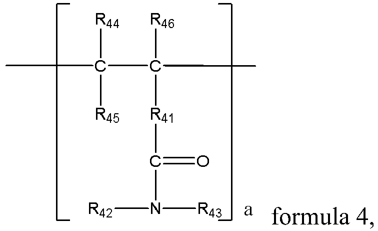
where in formula 4,
R₄₁ includes at least one of a single bond and a substituted or unsubstituted C1 to C5 methylene group;
R₄₂ to R₄₆ each independently include at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group; and
a includes any positive integer from 1 to 30.

Therefore, the amide group in the embodiments of the present application can increase flexibility, thereby increasing the flexibility of the modified carboxymethyl cellulose salt.

In some embodiments, R₄₁ includes a single bond, and the substituted or unsubstituted C3 to C150 amide group includes a structural formula represented by formula 4-1,

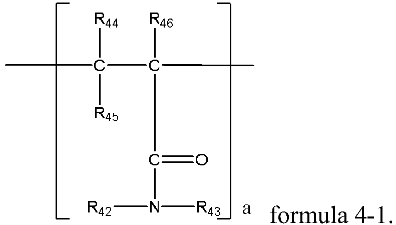

In some embodiments, the substituted or unsubstituted C3 to C150 amide group includes at least one of structural formulas represented by formula 4-11 to formula 4-15, 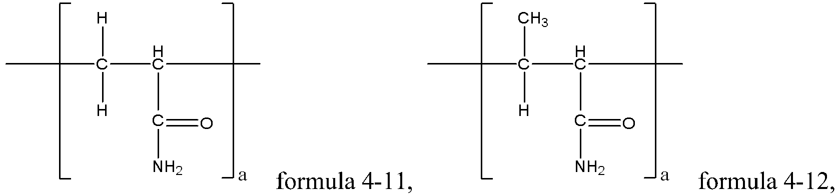 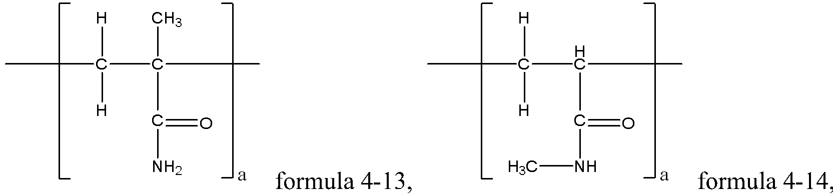 and

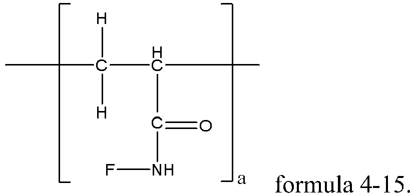

In some embodiments, R₄₁ includes a substituted or unsubstituted C1 to C5 methylene group, and the substituted or unsubstituted C3 to C150 amide group includes a structural formula represented by formula 4-2, 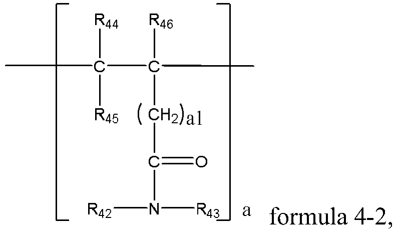 where a1 includes any positive integer from 1 to 5.

In some embodiments, the substituted or unsubstituted C3 to C150 amide group includes at least one of structural formulas represented by formula 4-21 to formula 4-24,

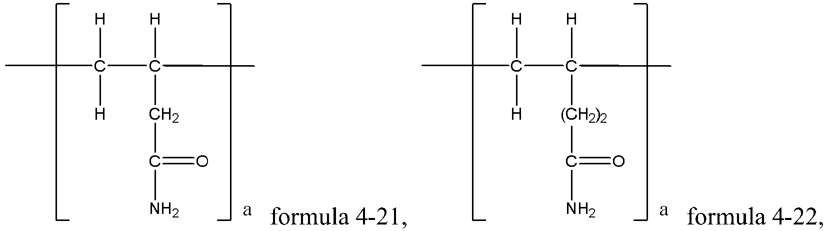

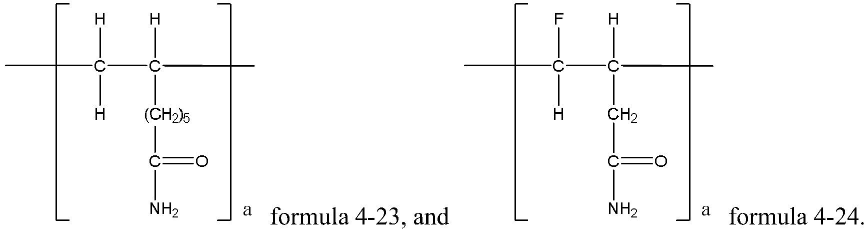

In some embodiments, the substituted or unsubstituted C3 to C150 ester group includes a structural formula represented by formula 5, 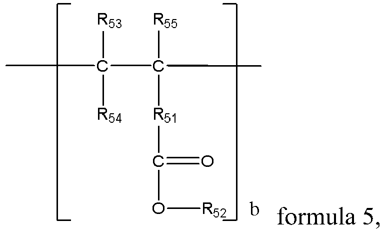
where in formula 5,
R₅₁ includes at least one of a single bond and a substituted or unsubstituted C1 to C5 methylene group;
R₅₂ includes a substituted or unsubstituted C1 to C5 alkyl group;
R₅₃ to R₅₅ each independently include at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group; and
b includes any positive integer from 1 to 30.

Therefore, the ester group in the embodiments of the present application can increase flexibility, thereby increasing the flexibility of the modified carboxymethyl cellulose salt.

In some embodiments, R₅₁ includes a single bond, and the substituted or unsubstituted C3 to C150 ester group includes a structural formula represented by formula 5-1,

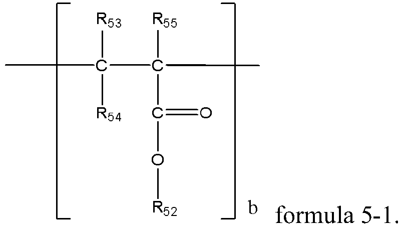

In some embodiments, the substituted or unsubstituted C3 to C150 ester group includes at least one of structural formulas represented by formula 5-11 to formula 5-16,

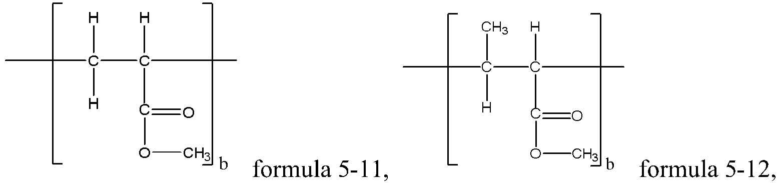

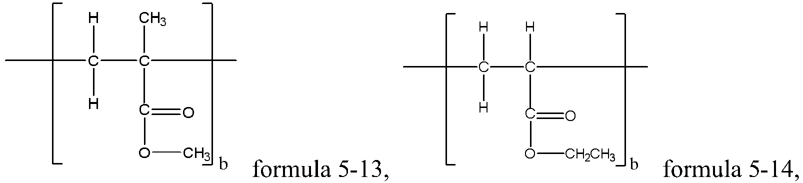

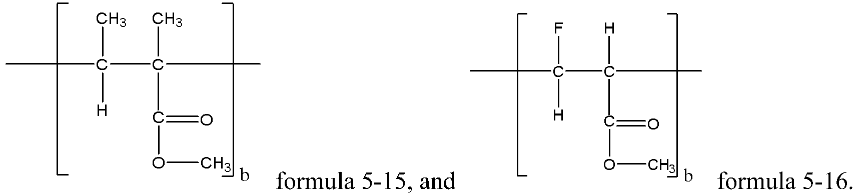

In some embodiments, R₅₁ includes a substituted or unsubstituted C1 to C5 methylene group, and the substituted or unsubstituted C3 to C150 ester group includes a structural formula represented by formula 5-2, 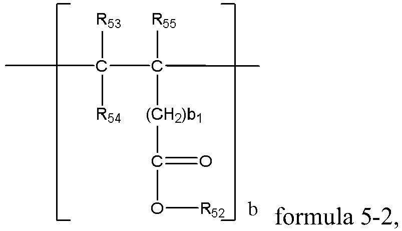 where b₁ includes any positive integer from 1 to 5.

In some embodiments, the substituted or unsubstituted C3 to C150 ester group includes at least one of structural formulas represented by formula 5-21 to formula 5-28,

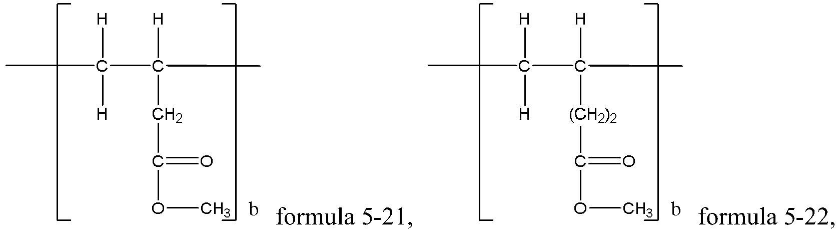

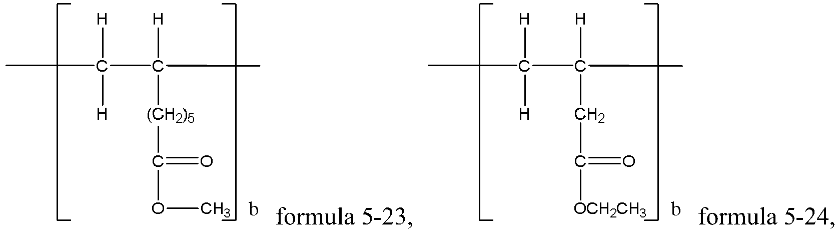

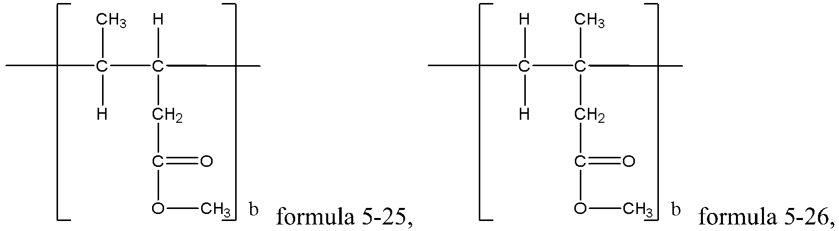

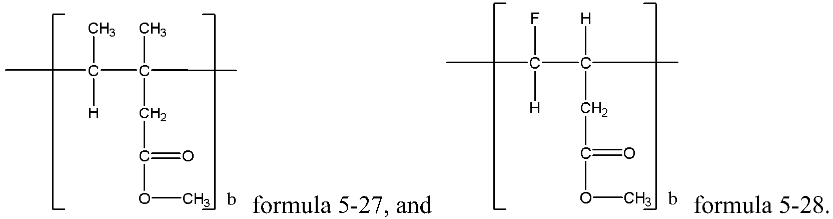

In some embodiments, the negative electrode dispersant has a weight average molecular weight of 40 wDa to 80 wDa. The grafted group in the negative electrode dispersant has a relatively small molecular weight, which reduces the hydrogen bonding between molecular chains of the negative electrode dispersant, while ensuring good dispersibility of the negative electrode dispersant.

In some embodiments, taking an elongation at break of a reference film made of sodium carboxymethyl cellulose as 100%, an elongation at break of a film made of the modified carboxymethyl cellulose salt is 200% to 300%, and the film made of the negative electrode dispersant and the reference film each have a width of 2.5 cm, a length of 5 cm, and a thickness of 1 mm. Therefore, the negative electrode dispersant has a higher elongation at break than that of conventional sodium carboxymethyl cellulose, so that the negative electrode sheet has good flexibility and is not prone to breakage.

In some embodiments, based on the total mass of the negative electrode film layer, the mass content of the negative electrode dispersant is 0.8% to 1.3%, optionally 1.0% to 1.2%. When the mass content of the negative electrode dispersant is within the above range, the flexibility of the negative electrode film layer can be effectively improved, the negative electrode active material in the negative electrode film layer is dispersed relatively uniformly, and the performance of the negative electrode film layer is relatively uniform.

In some embodiments, the negative electrode film layer has a coating weight of 190 mg/1540.25 mm² to 235 mg/1540.25 mm², optionally 220 mg/1540.25 mm² to 235 mg/1540.25 mm². A relatively high coating weight of the negative electrode film layer facilitates achieving a heavy coating.

According to a second aspect, the present application provides a negative electrode dispersant. The modified carboxymethyl cellulose salt includes a conductive group and a flexible group. The flexible group includes at least one of a substituted or unsubstituted ether group, a substituted or unsubstituted alkyl group, a substituted or unsubstituted polyolefin group, a substituted or unsubstituted amide group, and a substituted or unsubstituted ester group.

Therefore, the negative electrode dispersant according to the embodiments of the present application includes the modified carboxymethyl cellulose salt. The modified carboxymethyl cellulose salt includes a flexible group. The flexible group weakens the interaction force between the molecular chains of the modified carboxymethyl cellulose salt, improves the flexibility of the polymer molecular chains, and can impart excellent flexibility to the negative electrode film layer, reduce the risk of cracking of the negative electrode film layer, particularly reduce the risk of cracking of a negative electrode film layer with a heavy coating weight, and increase the energy density of the battery cell. Further, the flexible group has excellent flexibility and can further improve the flexibility of the modified carboxymethyl cellulose salt. The modified carboxymethyl cellulose salt further includes a conductive group. The conductive group has a high electronic conductivity, can improve the conductivity of the modified carboxymethyl cellulose salt, and improve the conductivity of the negative electrode film layer. Moreover, the modified carboxymethyl cellulose salt has good dispersing and leveling effects, and can effectively disperse the negative electrode active material, so that the negative electrode active material is uniformly dispersed, and the negative electrode film layer has a uniform thickness distribution and uniform performance. Therefore, when the negative electrode film layer includes the modified carboxymethyl cellulose salt, the flexibility of the negative electrode film layer is improved, the risk of cracking is low, and the negative electrode film layer has a uniform thickness and uniform performance.

In some embodiments, the modified carboxymethyl cellulose salt includes a compound represented by formula A, 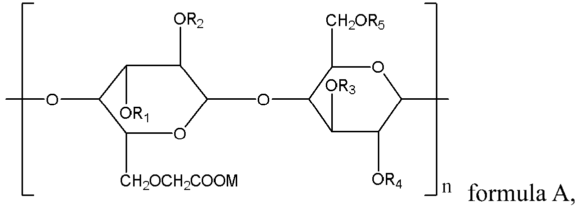
where in formula A,
M includes at least one of a metal ion or NH₄⁺;
R₁ to R₅ each independently include a hydrogen atom, a conductive group, or a flexible group, at least one of R₁ to R₅ includes a conductive group, and at least another one thereof includes a flexible group; and
n includes any positive integer from 1500 to 3000.

Therefore, the above materials in the embodiments of the present application have good dispersibility, and since the modified carboxymethyl cellulose salt further includes a conductive group and a flexible group, when the negative electrode dispersant is applied to a negative electrode film layer, the negative electrode film layer has uniform performance, is not prone to cracking, and has excellent conductivity.

**In** some embodiments, the conductive group includes one or more of an aromatic polymer group and a polyalkynyl group. The above groups have excellent conductivity and can improve the conductivity of the negative electrode film layer.

**In** some embodiments, the aromatic polymer group includes one or more of a five-membered heterocyclic polymer group, an aromatic hydrocarbon derivative polymer group, and a polyindolyl group.

**In** some embodiments, the five-membered heterocyclic polymer group includes one or more of a polypyrrolyl group, a polythiophene-based group, and a polyfuranyl group;

**In** some embodiments, the aromatic hydrocarbon derivative polymer group includes one or more of a polyacenyl group, a polyphenylene group, a polyphenylenevinylene group, a polyaniline group, and an aniline tetramer group.

**In** some embodiments, the polyalkynyl group includes one or more of a polyacetylenyl group and a polydiacetylenyl group. The above polyalkynyl group has good flexibility, which is beneficial for further improving the flexibility of the negative electrode dispersant; and can improve the conductivity of the negative electrode dispersant.

**In** some embodiments, the aromatic polymer group has a degree of polymerization of 2 to 50.

In some embodiments, the polyalkynyl group has a degree of polymerization of 2 to 50.

In some embodiments, the flexible group includes at least one of a substituted or unsubstituted C3 to C150 ether group, a substituted or unsubstituted C3 to C150 alkyl group, a substituted or unsubstituted C3 to C150 polyolefin group, a substituted or unsubstituted C3 to C150 amide group, and a substituted or unsubstituted C3 to C150 ester group. The above groups have excellent flexibility and can improve the flexibility of the negative electrode film layer.

In some embodiments, the substituted or unsubstituted C3 to C150 ether group includes a structural formula represented by formula 1, 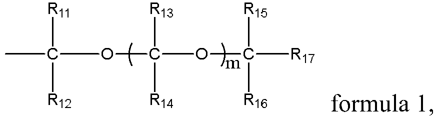
where in formula 1,
R₁₁ to R₁₇ each independently include at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group; and
m includes any positive integer from 5 to 60.

Therefore, the ether group in the embodiments of the present application can increase flexibility, thereby increasing the flexibility of the modified carboxymethyl cellulose salt.

In some embodiments, the substituted or unsubstituted C3 to C150 ether group includes at least one of structural formulas represented by formula 1-1 to formula 1-14, 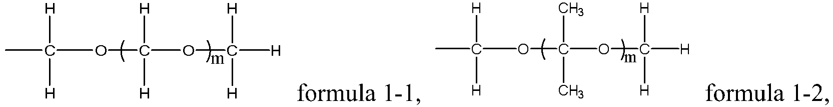 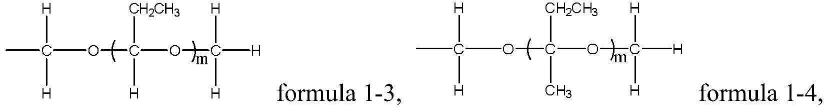 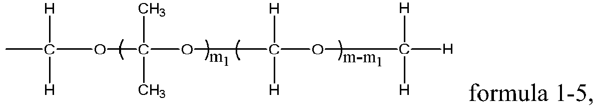 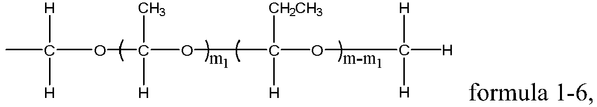 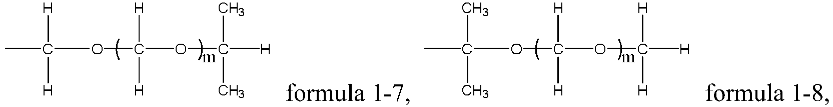 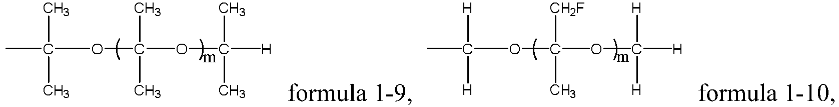 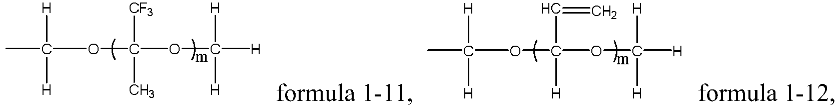 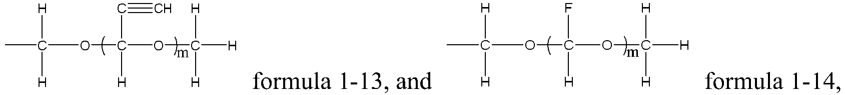 where m₁ includes any positive integer from 1 to 30.

In some embodiments, the substituted or unsubstituted C3 to C150 alkyl group includes a structural formula represented by formula 2, 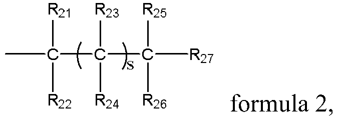
where in formula 2,
R₂₁ to R₂₇ each independently include at least one of a hydrogen atom, a halogen atom, and a substituted or unsubstituted C1 to C10 alkyl group; and
s includes any positive integer from 5 to 60.

Therefore, the alkyl group in the embodiments of the present application can increase flexibility, thereby increasing the flexibility of the modified carboxymethyl cellulose salt.

In some embodiments, the substituted or unsubstituted C3 to C150 alkyl group includes at least one of structural formulas represented by formula 2-1 to formula 2-11, 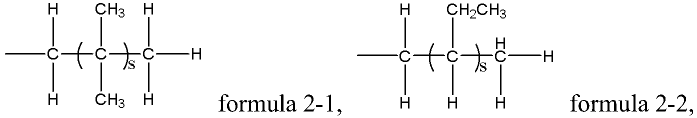 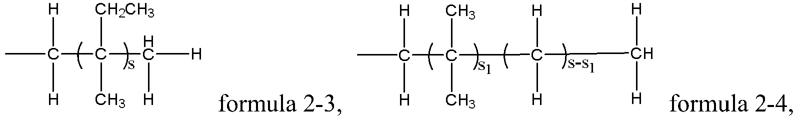 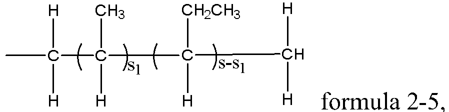 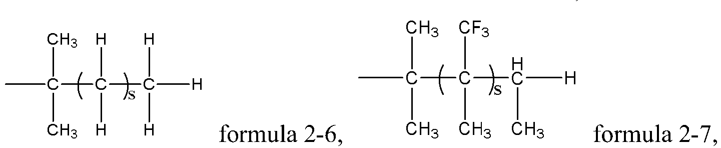 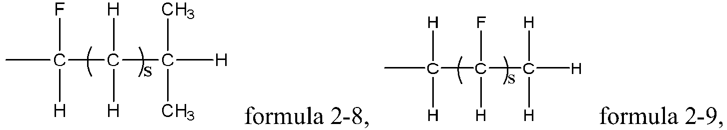 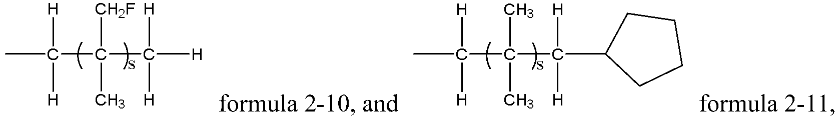 where s₁ includes any positive integer from 1 to 30.

In some embodiments, the substituted or unsubstituted C3 to C150 polyolefin group includes a structural formula represented by formula 3, 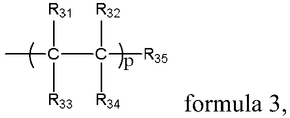
where in formula 3,
R₃₁ to R₃₄ each independently include at least one of a hydrogen atom, a halogen atom, a substituted or unsubstituted C1 to C10 alkyl group, and a substituted or unsubstituted C2 to C10 alkenyl group;
R₃₅ includes at least one of a hydrogen atom, a halogen atom, and a substituted or unsubstituted C1 to C10 alkyl group; and
p includes any positive integer from 5 to 60.

Therefore, the polyolefin group in the embodiments of the present application can increase flexibility, thereby increasing the flexibility of the modified carboxymethyl cellulose salt.

In some embodiments, the substituted or unsubstituted C3 to C150 polyolefin group includes at least one of structural formulas represented by formula 3-1 to formula 3-8,

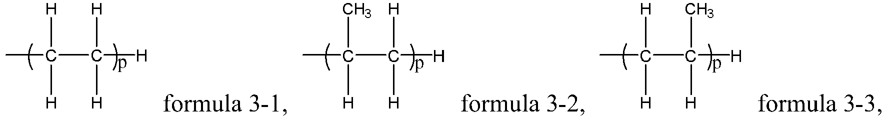

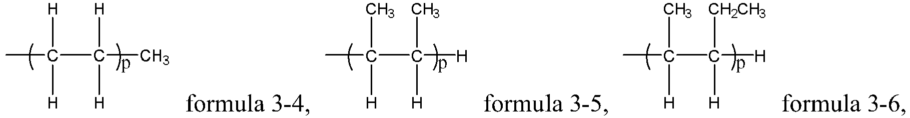

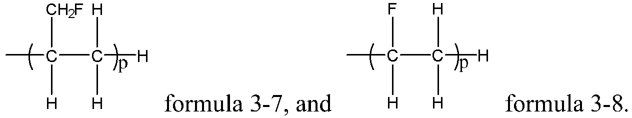

In some embodiments, the substituted or unsubstituted C3 to C150 amide group includes a structural formula represented by formula 4, 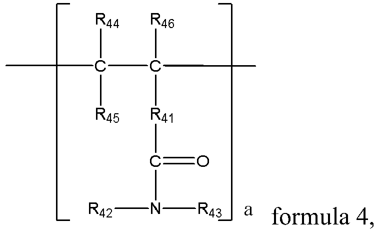
where in formula 4,
R₄₁ includes at least one of a single bond and a substituted or unsubstituted C1 to C5 methylene group;
R₄₂ to R₄₆ each independently include at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group; and
a includes any positive integer from 1 to 30.

Therefore, the amide group in the embodiments of the present application can increase flexibility, thereby increasing the flexibility of the modified carboxymethyl cellulose salt.

In some embodiments, R₄₁ includes a single bond, and the substituted or unsubstituted C3 to C150 amide group includes a structural formula represented by formula 4-1,

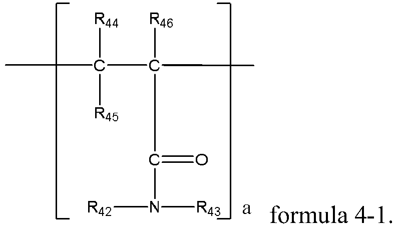

In some embodiments, the substituted or unsubstituted C3 to C150 amide group includes at least one of structural formulas represented by formula 4-11 to formula 4-15, 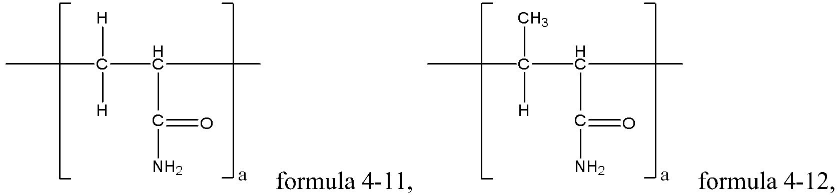 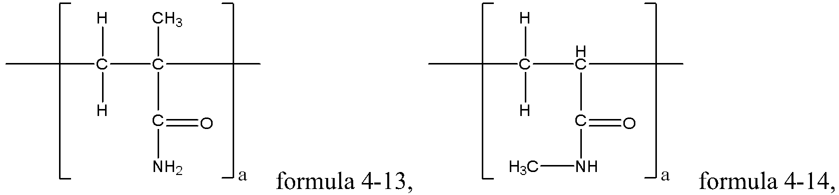 and

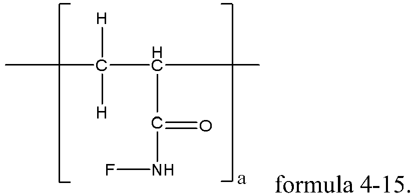

In some embodiments, R₄₁ includes a substituted or unsubstituted C1 to C5 methylene group, and the substituted or unsubstituted C3 to C150 amide group includes a structural formula represented by formula 4-2, 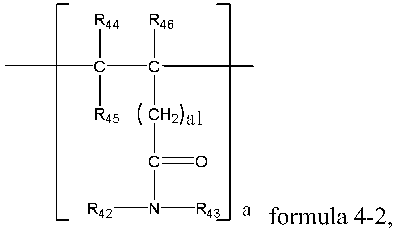 where a1 includes any positive integer from 1 to 5.

In some embodiments, the substituted or unsubstituted C3 to C150 amide group includes at least one of structural formulas represented by formula 4-21 to formula 4-24,

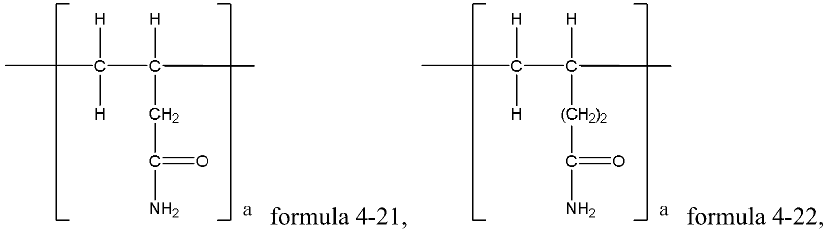

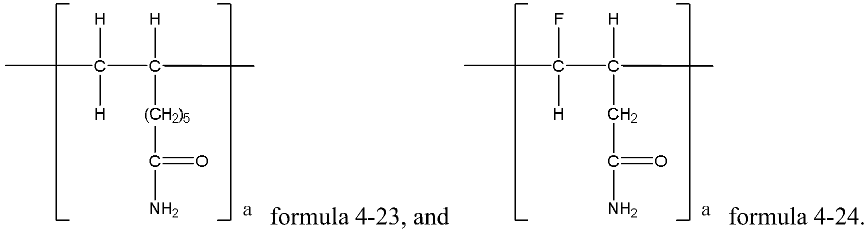

In some embodiments, the substituted or unsubstituted C3 to C150 ester group includes a structural formula represented by formula 5, 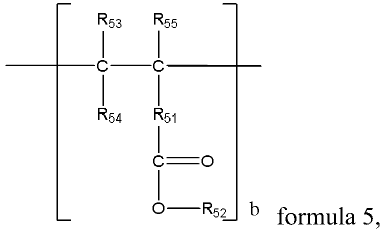
where in formula 5,
R₅₁ includes at least one of a single bond and a substituted or unsubstituted C1 to C5 methylene group;
R₅₂ includes a substituted or unsubstituted C1 to C5 alkyl group;
R₅₃ to R₅₅ each independently include at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group; and
b includes any positive integer from 1 to 30.

Therefore, the ester group in the embodiments of the present application can increase flexibility, thereby increasing the flexibility of the modified carboxymethyl cellulose salt.

In some embodiments, R₅₁ includes a single bond, and the substituted or unsubstituted C3 to C150 ester group includes a structural formula represented by formula 5-1,

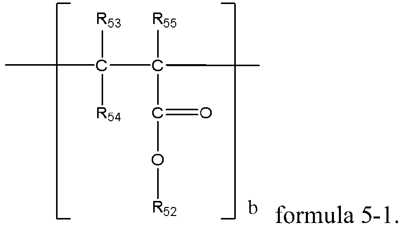

In some embodiments, the substituted or unsubstituted C3 to C150 ester group includes at least one of structural formulas represented by formula 5-11 to formula 5-16,

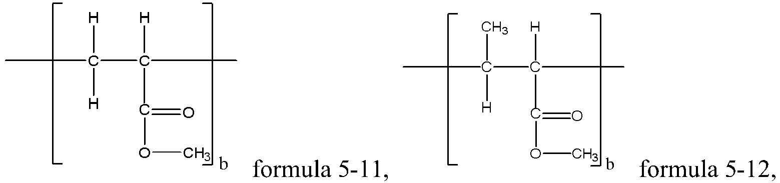

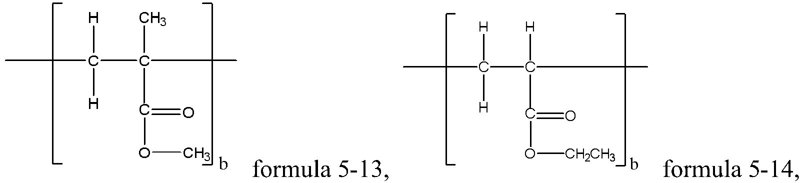

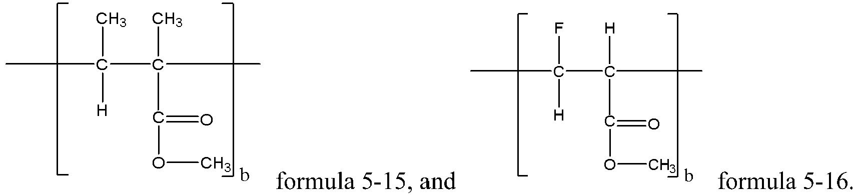

In some embodiments, R₅₁ includes a substituted or unsubstituted C1 to C5 methylene group, and the substituted or unsubstituted C3 to C150 ester group includes a structural formula represented by formula 5-2, 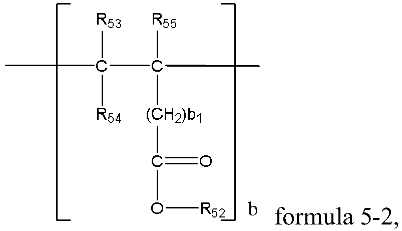 where b₁ includes any positive integer from 1 to 5.

In some embodiments, the substituted or unsubstituted C3 to C150 ester group includes at least one of structural formulas represented by formula 5-21 to formula 5-28,

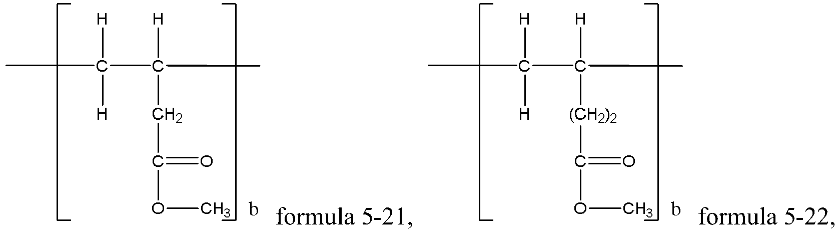

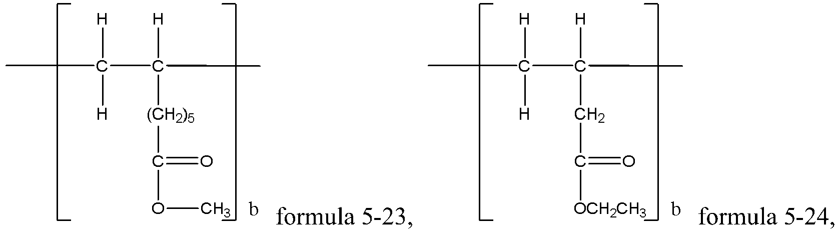

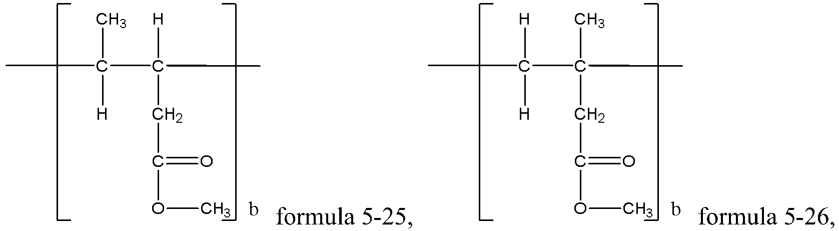

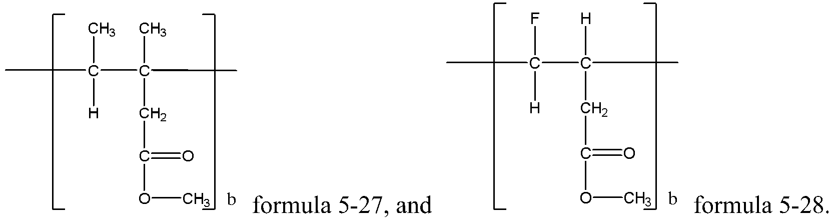

In some embodiments, the negative electrode dispersant has a weight average molecular weight of 40 wDa to 80 wDa. The grafted group in the negative electrode dispersant has a relatively small molecular weight, which reduces the hydrogen bonding between molecular chains of the negative electrode dispersant, while ensuring good dispersibility of the negative electrode dispersant.

In some embodiments, taking an elongation at break of a reference film made of sodium carboxymethyl cellulose as 100%, an elongation at break of a film made of the modified carboxymethyl cellulose salt is 200% to 300%, and the film made of the negative electrode dispersant and the reference film each have a width of 2.5 cm, a length of 5 cm, and a thickness of 1 mm. Therefore, the negative electrode dispersant has a higher elongation at break than that of conventional sodium carboxymethyl cellulose, and when the negative electrode dispersant is applied to a negative electrode sheet, it has good flexibility and is not prone to breakage.

According to a third aspect, the present application provides a modified carboxymethyl cellulose salt. The modified carboxymethyl cellulose salt includes a conductive group and a flexible group. The flexible group includes at least one of a substituted or unsubstituted ether group, a substituted or unsubstituted alkyl group, a substituted or unsubstituted polyolefin group, a substituted or unsubstituted amide group, and a substituted or unsubstituted ester group.

Therefore, the modified carboxymethyl cellulose salt according to the embodiments of the present application includes a flexible group. The flexible group weakens the interaction force between the molecular chains of the modified carboxymethyl cellulose salt, improves the flexibility of the polymer molecular chains, and can impart excellent flexibility to the negative electrode film layer, reduce the risk of cracking of the negative electrode film layer, particularly reduce the risk of cracking of a negative electrode film layer with a heavy coating weight, and increase the energy density of the battery cell. Further, the flexible group has excellent flexibility and can further improve the flexibility of the modified carboxymethyl cellulose salt. The modified carboxymethyl cellulose salt further includes a conductive group. The conductive group has a high electronic conductivity, can improve the conductivity of the modified carboxymethyl cellulose salt, and improve the conductivity of the negative electrode film layer. Moreover, the modified carboxymethyl cellulose salt has good dispersing and leveling effects, and can effectively disperse the negative electrode active material, so that the negative electrode active material is uniformly dispersed, and the negative electrode film layer has a uniform thickness distribution and uniform performance. Therefore, when the negative electrode film layer includes the modified carboxymethyl cellulose salt, the flexibility of the negative electrode film layer is improved, the risk of cracking is low, and the negative electrode film layer has a uniform thickness and uniform performance.

In some embodiments, the modified carboxymethyl cellulose salt includes a compound represented by formula A, 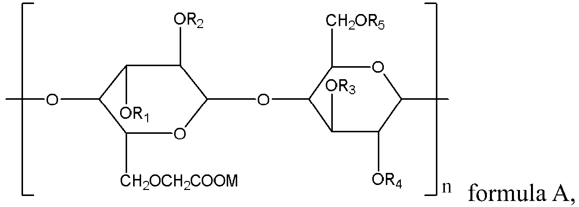
where in formula A,
M includes at least one of a metal ion or NH₄⁺;
R₁ to R₅ each independently include a hydrogen atom, a conductive group, or a flexible group, at least one of R₁ to R₅ includes a conductive group, and at least another one thereof includes a flexible group; and
n includes any positive integer from 1500 to 3000.

Therefore, the above materials in the embodiments of the present application have good dispersibility, and since the modified carboxymethyl cellulose salt further includes a conductive group and a flexible group, when the negative electrode dispersant is applied to a negative electrode film layer, the negative electrode film layer has uniform performance, is not prone to cracking, and has excellent conductivity.

In some embodiments, the conductive group includes one or more of an aromatic polymer group and a polyalkynyl group. The above groups have excellent conductivity and can improve the conductivity of the negative electrode film layer.

In some embodiments, the aromatic polymer group includes one or more of a five-membered heterocyclic polymer group, an aromatic hydrocarbon derivative polymer group, and a polyindolyl group.

In some embodiments, the five-membered heterocyclic polymer group includes one or more of a polypyrrolyl group, a polythiophene-based group, and a polyfuranyl group;

In some embodiments, the aromatic hydrocarbon derivative polymer group includes one or more of a polyacenyl group, a polyphenylene group, a polyphenylenevinylene group, a polyaniline group, and an aniline tetramer group.

In some embodiments, the polyalkynyl group includes one or more of a polyacetylenyl group and a polydiacetylenyl group. The above polyalkynyl group has good flexibility, which is beneficial for further improving the flexibility of the negative electrode dispersant; and can improve the conductivity of the negative electrode dispersant.

In some embodiments, the aromatic polymer group has a degree of polymerization of 2 to 50.

In some embodiments, the polyalkynyl group has a degree of polymerization of 2 to 50.

In some embodiments, the flexible group includes at least one of a substituted or unsubstituted C3 to C150 ether group, a substituted or unsubstituted C3 to C150 alkyl group, a substituted or unsubstituted C3 to C150 polyolefin group, a substituted or unsubstituted C3 to C150 amide group, and a substituted or unsubstituted C3 to C150 ester group. The above groups have excellent flexibility and can improve the flexibility of the negative electrode film layer.

According to a fourth aspect, the present application further provides a negative electrode sheet. The negative electrode sheet includes a negative electrode current collector and a negative electrode film layer provided on at least one surface of the negative electrode current collector. The negative electrode film layer includes the negative electrode dispersant according to any one of the embodiments of the second aspect of the present application.

According to a fifth aspect, an embodiment of the present application further provides a battery. The battery includes the battery cell according to any one of the embodiments of the first aspect of the present application.

According to a sixth aspect, an embodiment of the present application further provides an electric device, which includes the battery according to any one of the embodiments of the fifth aspect of the present application.

### BRIEF DESCRIPTION OF THE DRAWINGS

In order to describe the technical solutions of embodiments of the present application more clearly, the following provides a brief introduction to the drawings required in the embodiments of the present application. Clearly, the drawings described below are only some embodiments of the present application. Those of ordinary skill in the art can also obtain other drawings according to the drawings without any creative effort.
FIG. 1 is a schematic diagram of a battery cell according to an embodiment of the present application;
FIG. 2 is a schematic exploded view of the battery cell according to the embodiment shown in FIG. 1;
FIG. 3 is a schematic diagram of a battery module according to an embodiment of the present application;
FIG. 4 is a schematic diagram of a battery pack according to an embodiment of the present application;
FIG. 5 is a schematic exploded view of the battery pack according to the embodiment shown in FIG. 4; and
FIG. 6 is a schematic diagram of an electric device including a battery cell according to an embodiment of the present application as a power source.

The accompanying drawings are not necessarily drawn to the actual scale.

### Description of reference numerals:

1-battery pack; 2-upper box; 3-lower box; 4-battery module;
5-battery cell; 51-case; 52-electrode assembly; 53-cover plate; and
6-electric device.

### DETAILED DESCRIPTION

Hereinafter, embodiments of the modified carboxymethyl cellulose salt, the negative electrode dispersant, the negative electrode sheet, the battery cell, the battery, and the electric device specifically disclosed in the present application will be described in detail with reference to the accompanying drawings as appropriate. However, there may be situations where unnecessary detailed descriptions are omitted. For example, there may be situations where detailed descriptions of well-known technologies and repeated descriptions of substantially identical structure are omitted, for the purpose of preventing the following descriptions from becoming unnecessarily lengthy, and helping to facilitate understanding by those skilled in the art. In addition, the drawings and subsequent descriptions are provided for those skilled in the art to fully understand the present application, and are not intended to limit the subject matters recited in the claims.

Any "range" disclosed in the present application is defined by a lower limit and an upper limit. A given range is defined by selecting a lower limit and an upper limit. The selected lower limit and upper limit define boundaries of the particular range. The range defined in this way may be inclusive or exclusive of endpoints, and may be combined in any way, that is, any lower limit may be combined with any upper limit to form a new range. For example, if ranges of 60 to 120 and 80 to 110 are listed for specific parameters, ranges of 60 to 110 and 80 to 120 are also within the scope of the disclosure. In addition, if the minimum range values 1 and 2 are listed, and if the maximum range values 3, 4, and 5 are listed, the following ranges can all be expected: 1 to 3, 1 to 4, 1 to 5, 2 to 3, 2 to 4, and 2 to 5. In the present application, unless otherwise specified, the value range "a to b" represents an abbreviated representation of any combination of real numbers between a and b, where a and b are both real numbers. For example, the numerical range "0 to 5" means that all real numbers between 0 and 5 are listed herein, and "0 to 5" is merely an abbreviated representation of the combination of these numbers. In addition, when a certain parameter is expressed as an integer ≥2, it is equivalent to disclosing that the parameter is, for example, and integer such as 2, 3, 4, 5, 6, 7, 8, 9, 10, 11, 12, or the like.

Unless otherwise specified, all the embodiments and optional embodiments of the present application may be combined with each other to form new technical solutions.

Unless otherwise specified, all technical features and optional technical features of the present application may be combined with each other to form new technical solutions.

Unless otherwise specified, all steps in the present application may be performed in sequence or in any order, preferably, in sequence. For example, if a method includes steps a and b, it means that the method may include steps a and b performed sequentially, or may include steps b and a performed sequentially. For example, if it is mentioned that the method may further include step c, it means that step c may be added to the method in any order. For example,

the method may include steps a, b, and c, or may include steps a, c, and b, or may include steps c, a, and b, and so on.

Unless otherwise specified, "comprise" and "include" mentioned in the present application indicate an open-ended or closed-ended meaning. For example, the terms "comprise" and "include" may indicate that other components not listed may further be comprised or included, or only listed components may be comprised or included.

If not specifically stated, in the present application, the term 'or' is inclusive. For example, the phrase "A or B" represents "A, B, or both A and B". More specifically, the condition "A or B" is satisfied by any one of the following conditions: A is true or present and B is false or absent; A is false or absent and B is true or present; or both A and B are true or present.

Throughout this specification, the substituents of the compounds are disclosed in the form of groups or ranges. It is explicitly contemplated that such description includes each individual subcombination of the members within these groups and ranges. For example, it is explicitly contemplated that the term "C1 to C8 alkyl group" individually discloses C1, C2, C3, C4, C5, C6, C7, C8, C1 to C8, C1 to C7, C1 to C6, C1 to C5, C1 to C4, C1 to C3, C1 to C2, C2 to C8, C2 to C7, C2 to C6, C2 to C5, C2 to C4, C2 to C3, C3 to C8, C3 to C7, C3 to C6, C3 to C5, C3 to C4, C4 to C8, C4 to C7, C4 to C6, C4 to C5, C5 to C8, C5 to C7, C5 to C6, C6 to C8, C6 to C7, and C7 to C8 alkyl groups.

As another example, it is explicitly contemplated that an integer in a range of 5 to 40 individually discloses 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40. It is explicitly contemplated that an integer in a range of 1 to 20 individually discloses 1, 2, 3, 4, 5, 6, 7, 8, 9, 10, 11, 12, 13, 14, 15, 16, 17, 18, 19, and 20. Accordingly, other groups or ranges are explicitly contemplated.

The negative electrode sheet includes a negative electrode current collector and a negative electrode film layer provided on at least one side of the negative electrode current collector. The negative electrode film layer is formed by coating a negative electrode slurry onto the negative electrode current collector followed by drying. During the process of forming the negative electrode film layer from the negative electrode slurry, phenomena such as cracking may occur, causing the negative electrode sheet to fail to meet production requirements. In order to increase the energy density of the battery cell, the negative electrode film layer is usually applied with a heavy coating weight, which will further exacerbate the cracking of the negative electrode film layer, making it difficult for the negative electrode sheet to achieve a heavy coating weight. In order to alleviate the cracking of the negative electrode film layer, related technologies add a plasticizer such as butanediol or the like to the negative electrode slurry. The plasticizer is usually a small molecule compound with a relatively small molecular weight. The plasticizer can enter between the polymer molecular chains of the binder, reduce the intermolecular force of the binder polymer, and reduce the crystallinity of the polymer molecular chains, thereby improving the moldability and flexibility of the negative electrode film layer and alleviating the cracking of the negative electrode film layer. However, residual plasticizer can easily cause the thickness of the negative electrode film layer to be nonuniform, leading to interface problems such as dark marks on the negative electrode film layer.

Moreover, due to the high energy density requirement of the battery cell, auxiliary agents in the negative electrode film layer, such as a conductive agent, reduce the addition amount of the negative electrode active material, and the addition of auxiliary agents reduces the energy density. However, reducing the amount of auxiliary agents may affect the fast charging performance of the battery cell. Therefore, in related technologies, it is difficult to achieve both energy density and fast charging performance.

**In** view of the above problems, an embodiment of the present application provides a negative electrode dispersant. The negative electrode dispersant includes a modified carboxymethyl cellulose salt. The carboxymethyl cellulose salt is graft-modified with a conductive group and a flexible group. The conductive group can improve the electronic conductivity of the modified carboxymethyl cellulose salt and enhance its conductive performance. The flexible group can reduce the interaction force between molecular chains. When applied to a negative electrode slurry, it can exert an excellent dispersing effect on the negative electrode active material and the like, improve the flexibility of the negative electrode film layer, and alleviate the cracking of the negative electrode film layer, thereby improving the energy density and fast charging performance of the battery cell.

### Modified Carboxymethyl Cellulose Salt

According to a first aspect, an embodiment of the present application provides a modified carboxymethyl cellulose salt. The modified carboxymethyl cellulose salt includes a conductive group and a flexible group. The flexible group includes at least one of a substituted or unsubstituted ether group, a substituted or unsubstituted alkyl group, a substituted or unsubstituted polyolefin group, a substituted or unsubstituted amide group, and a substituted or unsubstituted ester group.

Carboxymethyl cellulose salt (CMC-M) is a type of anionic water-soluble cellulose etherified derivative. When applied to a negative electrode slurry, it can reduce the interfacial tension between the negative electrode active material and the solvent, exert a good dispersing effect on the negative electrode active material and the like, and under the action of stirring, facilitate the uniform dispersion of the negative electrode active material in the solvent to form a stable slurry system.

The molecular chains of carboxymethyl cellulose salt are rich in hydroxyl groups (-OH). The presence of hydroxyl groups enables relatively strong van der Waals forces or hydrogen bonds to form between the molecular chains of the carboxymethyl cellulose salt itself, resulting in relatively high drying stress of the negative electrode slurry and subsequent warpage during drying, and cracking may occur during a subsequent calendering process, resulting in cracking of the negative electrode film layer.

In contrast, the negative electrode dispersant according to the embodiments of the present application includes a modified carboxymethyl cellulose salt. The modified carboxymethyl cellulose salt is obtained by side-chain graft modification of a carboxymethyl cellulose salt (CMC-M). The repeating units included in the modified carboxymethyl cellulose salt may be one or more types. Through grafting a graft group onto the side chain of the carboxymethyl cellulose salt, the graft group substitutes the hydrogen atom of a hydroxyl group, destroying the hydroxyl structure in the carboxymethyl cellulose salt, thereby destroying the regular hydrogen bond structure and reducing the number of hydrogen bonds.

The modified carboxymethyl cellulose salt is one in which the hydrogen atom of at least one hydroxyl group in the carboxymethyl cellulose salt is substituted with a flexible group. Such a group can reduce the interaction force between polymer molecular chains, thereby reducing the stress generated during drying. Moreover, because the flexible group has a certain degree of flexibility, it can improve the flexibility of the modified carboxymethyl cellulose salt. When the negative electrode dispersant is applied to a negative electrode slurry, the drying stress of the negative electrode slurry during the drying process is relatively small, the risk of cracking of the negative electrode film layer is reduced, the interface performance of the negative electrode film layer is improved, and the flexibility of the negative electrode film layer is enhanced. In particular, the risk of cracking of a negative electrode film layer with a heavy coating weight can be reduced, which is beneficial for increasing the energy density of the battery cell.

The modified carboxymethyl cellulose salt is one in which the hydrogen atom of at least another hydroxyl group in the carboxymethyl cellulose salt is substituted with a conductive group. The conductive group has a high electronic conductivity, can improve the conductivity of the modified carboxymethyl cellulose salt, and when the negative electrode dispersant is applied to a negative electrode slurry, can improve the conductivity of the negative electrode film layer formed by drying the negative electrode slurry.

Moreover, the main structure of the modified carboxymethyl cellulose salt is still a carboxymethyl cellulose salt, so it still has a good dispersing effect, can effectively reduce the interfacial tension between the negative electrode active material and the solvent, so that the negative electrode active material is uniformly dispersed in the negative electrode slurry, and the negative electrode film layer has a uniform thickness distribution and uniform performance.

Therefore, when the modified carboxymethyl cellulose salt is applied to a negative electrode slurry, the negative electrode film layer formed by drying the negative electrode slurry can achieve a heavy coating weight, and the negative electrode film layer has uniform performance and good conductivity.

In some embodiments, the cation in the modified carboxymethyl cellulose salt includes at least one of a metal ion or an ammonium ion (NH₄⁺). For example, the metal ion includes at least one of a lithium ion, a sodium ion, or a potassium ion.

In some embodiments, the modified carboxymethyl cellulose salt includes at least one of a modified carboxymethyl cellulose lithium salt, a modified carboxymethyl cellulose sodium salt, or a modified carboxymethyl cellulose ammonium salt. The above materials have good dispersibility.

In other embodiments, the modified carboxymethyl cellulose salt may further include a modified carboxymethyl cellulose potassium salt, or the like.

In some embodiments, the modified carboxymethyl cellulose salt includes a compound represented by formula A, 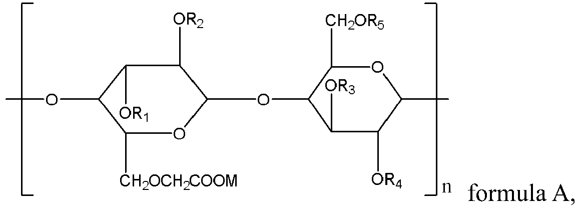
where in formula A,
M includes at least one of a metal ion or NH₄⁺;
R₁ to R₅ each independently include a hydrogen atom, a conductive group, or a flexible group, at least one of R₁ to R₅ includes a conductive group, and at least another one thereof includes a flexible group; and
n represents the degree of polymerization of the modified carboxymethyl cellulose salt, and n may also be considered as the number of repeating units.

The above materials have good dispersibility, and since the modified carboxymethyl cellulose salt further includes a conductive group and a flexible group, when the negative electrode dispersant is applied to a negative electrode film layer, the negative electrode film layer has uniform performance, is not prone to cracking, and has excellent conductivity.

Optionally, n includes any positive integer from 1500 to 3000. Exemplarily, n may be 1500, 1600, 1700, 1800, 1900, 2000, 2100, 2200, 2300, 2400, 2500, 2600, 2700, 2800, 2900, or 3000.

The repeating units in the modified carboxymethyl cellulose salt may include one or more types.

The negative electrode dispersant may include one or more types of modified carboxymethyl cellulose salts.

At least two of R₁ to R₅ substitute the hydrogen atoms of hydroxyl groups. At least one of R₁ to R₅ includes a conductive group, which can be understood as meaning that the hydrogen atom of at least one hydroxyl group in the carboxymethyl cellulose salt is substituted with a conductive group. At least one of R₁ to R₅ includes a flexible group, which can be understood as meaning that the hydrogen atom of at least one hydroxyl group in the carboxymethyl cellulose salt is substituted with a flexible group. That is, at least two of R₁ to R₅ are not hydrogen atoms. For example, three of R₁ to R₅ may be hydrogen atoms, or two thereof may be hydrogen atoms, or one thereof may be a hydrogen atom, or even none of R₁ to R₅ may be hydrogen atoms.

The conductive group may substitute the hydrogen atoms of at least two hydroxyl groups, so that the electronic conductivity of the modified carboxymethyl cellulose salt is further improved.

The flexible group may substitute the hydrogen atoms of at least two hydroxyl groups.

As the number of hydrogen atoms decreases, it means that the number of substituted hydroxyl groups in the carboxymethyl cellulose salt increases. The more substituted hydroxyl groups there are, the smaller the interaction force between the molecular chains of the carboxymethyl cellulose salt is, the smaller the drying stress of the negative electrode slurry is, and the negative electrode film layer is less prone to phenomena such as cracking, thereby improving its interface performance. In a case where none of R₁ to R₅ is a hydrogen atom, the carboxymethyl cellulose salt contains substantially no hydroxyl groups, the number of hydrogen bonds contained in the carboxymethyl cellulose salt is relatively small, the interaction between the molecular chains of the carboxymethyl cellulose salt is relatively small, the drying stress is significantly reduced, and the negative electrode film layer is less prone to phenomena such as cracking, thereby improving its interface performance.

### [Conductive Group]

In some embodiments, the conductive group may include a conductive polymer, which is a polymer having a highly π-π conjugated polymer chain. Specifically, the main chain of the conductive polymer contains alternating single bonds and double bonds, has a conjugated long-chain structure, and the delocalized π electrons on the double bonds can migrate along the molecular chain to form an electric current, making the polymer structure inherently conductive.

In some embodiments, the conductive group includes a C2 to C150 conductive group.

As the length of the molecular chain increases, the number of π electrons increases, the electron activation energy decreases, the electrons are more easily delocalized, and the conductivity improves. Moreover, as the length of the molecular chain increases, the flexibility of the molecular chain increases, which can further improve the flexibility of the modified carboxymethyl cellulose.

In some embodiments, the conductive group includes one or more of an aromatic polymer group and a polyalkynyl group.

In some embodiments, the aromatic polymer group includes one or more of a five-membered heterocyclic polymer group, an aromatic hydrocarbon derivative polymer group, and a polyindolyl group; the above aromatic polymer group also has a steric hindrance effect, which can increase the spacing between molecular chains, further weaken the interaction force between chain segments, further reduce the stress generated during drying, and reduce the risk of cracking of the negative electrode film layer; and can improve the conductivity of the negative electrode dispersant.

Exemplarily, the five-membered heterocyclic polymer group includes one or more of a polypyrrolyl group, a polythiophene-based group, and a polyfuranyl group. For example, the polythiophene-based group includes one or more of a polythienyl group and a polyethylenedioxythiophene group.

Exemplarily, the aromatic hydrocarbon derivative polymer group includes one or more of a polyacenyl group, a polyphenylene group, a polyphenylenevinylene group, a polyaniline group, and an aniline tetramer group.

In some embodiments, the polyalkynyl group includes one or more of a polyacetylenyl group and a polydiacetylenyl group. The above polyalkynyl group has good flexibility, which is beneficial for further improving the flexibility of the negative electrode dispersant; and can improve the conductivity of the negative electrode dispersant.

In some embodiments, the aromatic polymer group has a degree of polymerization of 2 to 50, optionally 2 to 20, for example, 2, 3, 4, 5, 8, 10, 12, 15, 18, 20, 22, 25, 28, 30, 32, 35, 38, 40, 42, 45, 48, 50, or within a range formed by any two of the above values.

In some embodiments, the polyalkynyl group has a degree of polymerization of 2 to 50, optionally 2 to 20, for example, 2, 3, 4, 5, 8, 10, 12, 15, 18, 20, 22, 25, 28, 30, 32, 35, 38, 40, 42, 45, 48, 50, or within a range formed by any two of the above values.

### [Flexible Group]

To further reduce the hydrogen bonding in the negative electrode dispersant, the substituent group is selected as a long-chain structure, for example, a C3 to C150 long-chain structure. If a portion of the hydroxyl groups in the modified carboxymethyl cellulose salt is unsubstituted and another portion of the hydroxyl groups is substituted with a long-chain structure, the long-chain structure produces a steric hindrance effect with large spatial occupancy, which can further weaken the hydrogen bonding formed by the unsubstituted hydroxyl groups, thereby reducing the interaction force between molecular chains, further reducing drying stress, reducing the risk of cracking of the negative electrode film layer, and improving the interface performance of the negative electrode film layer. The long-chain structure has excellent flexibility, can improve the flexibility of the negative electrode film layer, further reduce the risk of cracking of the negative electrode film layer, and enable the negative electrode dispersant to have good flexibility and dispersibility when used in a negative electrode slurry.

In some embodiments, the flexible group includes at least one of a substituted or unsubstituted C3 to C150 ether group, a substituted or unsubstituted C3 to C150 alkyl group, a substituted or unsubstituted C3 to C150 polyolefin group, a substituted or unsubstituted C3 to C150 amide group, and a substituted or unsubstituted C3 to C150 ester group.

The above groups are long-chain groups, which enable the modified carboxymethyl cellulose salt to have excellent flexibility and can improve the flexibility of the negative electrode film layer formed by drying the negative electrode slurry.

When the above groups are substituted with a substituent, the substituent may include a halogen atom or a group containing a heteroatom. The halogen atom may include a fluorine atom, a chlorine atom, a bromine atom, an iodine atom, or the like. The heteroatom may include a nitrogen atom, a sulfur atom, an oxygen atom, or the like.

### [Ether Group]

In some embodiments, each of R₁ to R₅ independently includes a substituted or unsubstituted ether group, optionally a substituted or unsubstituted C3 to C150 ether group. Because an ether group has a relatively long chain, it can increase flexibility, thereby increasing the flexibility of the modified carboxymethyl cellulose salt.

In some embodiments, the ether group includes a structural formula represented by formula 1, 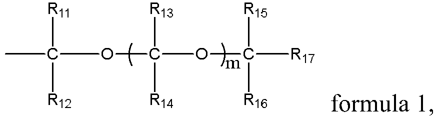
where in formula 1,
R₁₁ to R₁₇ each independently include at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group.

Optionally, when the above group is substituted, the substituent may include a halogen atom, where the halogen atom may include at least one of a fluorine atom, a chlorine atom, a bromine atom, or an iodine atom.

m is the number of repeating units. m includes any positive integer from 5 to 60. Optionally, m includes any positive integer from 5 to 45. When m is within the above range, the negative electrode dispersant can both reduce hydrogen bonding and maintain good dispersion performance.

In some embodiments, m may be 5, 6, 7, 8, 9, 10, 12, 13, 14, 15, 16, 18, 20, 25, 30, 35, 40, 45, 50, 55, or 60.

Exemplarily, the ether group includes at least one of structural formulas represented by formula 1-1 to formula 1-14,

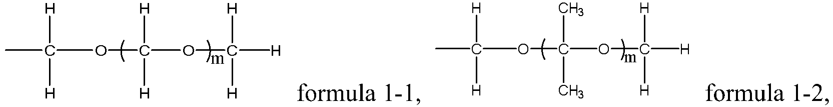

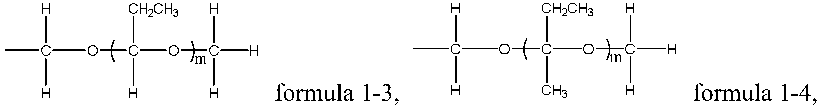

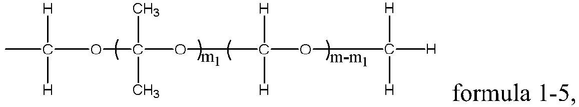

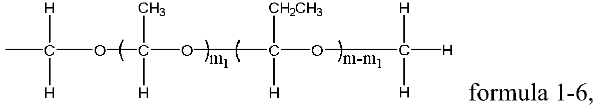

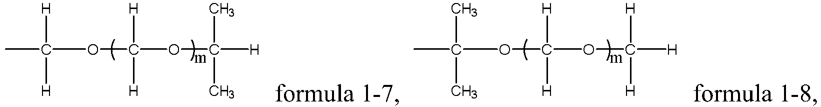

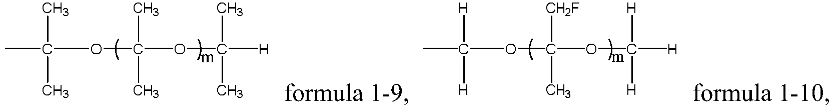

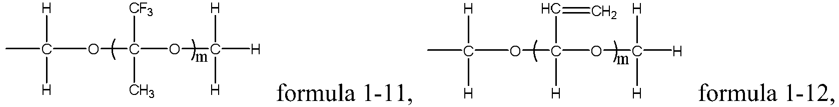

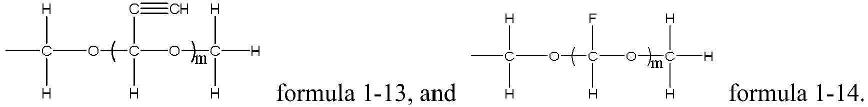

In some embodiments, m₁ is the number of repeating units, and m₁ includes any positive integer from 1 to 30, and may be 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30.

In the embodiments of the present application, m-m₁ represents the value of m minus m₁, and m-m₁ includes any positive integer from 1 to 30, and may be 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30.

### [Substituted or Unsubstituted Alkyl Group]

In some embodiments, each of R₁ to R₅ independently includes a substituted or unsubstituted alkyl group, optionally a substituted or unsubstituted C3 to C150 alkyl group. The alkyl group may include an unsaturated alkyl group or a saturated alkyl group. The unsaturated alkyl group may be an alkyl group containing a ring structure, for example, an alkyl group containing a three-membered ring, a five-membered ring, or the like. The alkyl group containing a ring structure can further increase the steric hindrance effect and reduce drying stress. The saturated alkyl group may include a branched alkyl group or a linear alkyl group. Due to its relatively long chain, the saturated alkyl group, especially a linear alkyl group, can increase the flexibility of the modified carboxymethyl cellulose salt.

In some embodiments, the substituted or unsubstituted C3 to C150 alkyl group includes a structural formula represented by formula 2, 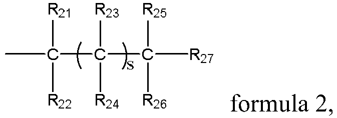
where in formula 2,
R₂₁ to R₂₇ each independently include at least one of a hydrogen atom, a halogen atom, and a substituted or unsubstituted C1 to C10 alkyl group.

Optionally, R₂₁ to R₂₇ each independently include at least one of a hydrogen atom, a halogen atom, and a substituted or unsubstituted C1 to C10 saturated alkyl group.

Optionally, when the above group is substituted, the substituent may include a halogen atom, where the halogen atom may include at least one of a fluorine atom, a chlorine atom, a bromine atom, or an iodine atom.

s is the number of repeating units, and s includes any positive integer from 5 to 60. Optionally, s includes any positive integer from 5 to 45. When s is within the above range, the negative electrode dispersant can both reduce hydrogen bonding and maintain good dispersion performance.

In some embodiments, s may be 5, 6, 7, 8, 9, 10, 12, 13, 14, 15, 16, 18, 20, 25, 30, 35, 40, 45, 50, 55, or 60.

Exemplarily, the substituted or unsubstituted C3 to C150 alkyl group includes at least one of structural formulas represented by formula 2-1 to formula 2-11,

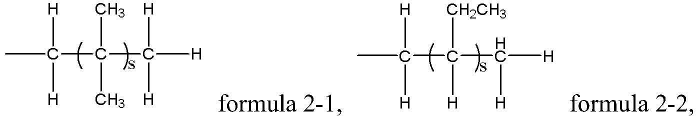

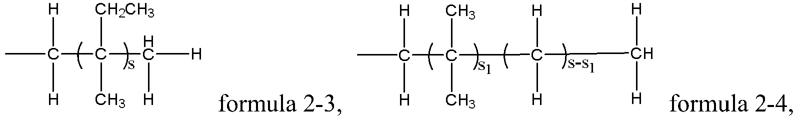

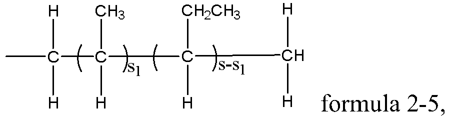

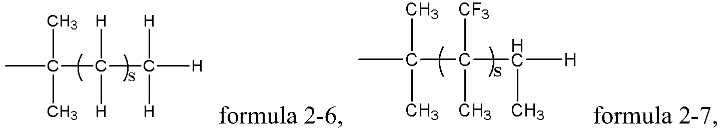

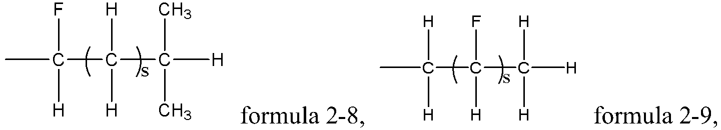

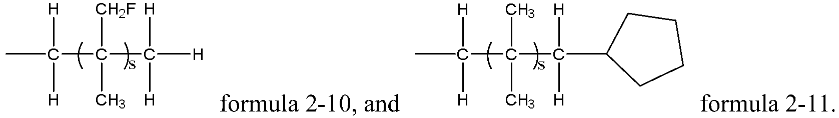

In some embodiments, s₁ is the number of repeating units, and s₁ includes any positive integer from 1 to 30. s₁ may be 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30.

In the embodiments of the present application, s-s₁ represents the value of s minus s₁, and s-s₁ includes any positive integer from 1 to 30. It may be 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30.

### [Substituted or Unsubstituted Polyolefin Group]

In some embodiments, each of R₁ to R₅ independently includes a substituted or unsubstituted polyolefin group, optionally a substituted or unsubstituted C3 to C150 polyolefin group. Due to its relatively long chain, a polyolefin group can increase the flexibility of the modified carboxymethyl cellulose salt.

In some embodiments, the substituted or unsubstituted C3 to C150 polyolefin group includes a structural formula represented by formula 3, 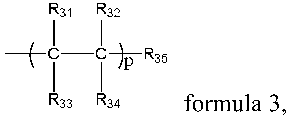
where in formula 3,
R₃₁ to R₃₄ each independently include at least one of a hydrogen atom, a halogen atom, a substituted or unsubstituted C1 to C10 alkyl group, and a substituted or unsubstituted C2 to C10 alkenyl group;
R₃₅ includes at least one of a hydrogen atom, a halogen atom, and a substituted or unsubstituted C1 to C10 alkyl group.

Optionally, when the above group is substituted, the substituent may include a halogen atom, where the halogen atom may include at least one of a fluorine atom, a chlorine atom, a bromine atom, or an iodine atom.

p is the number of repeating units, and p includes any positive integer from 5 to 60. Optionally, p includes any positive integer from 5 to 45. When p is within the above range, the negative electrode dispersant can both reduce hydrogen bonding and maintain good dispersion performance.

In some embodiments, p may be 5, 6, 7, 8, 9, 10, 12, 13, 14, 15, 16, 18, 20, 25, 30, 35, 40, 45, 50, 55, or 60.

Exemplarily, the substituted or unsubstituted C3 to C150 polyolefin group includes at least one of structural formulas represented by formula 3-1 to formula 3-8,

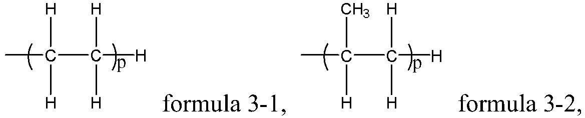

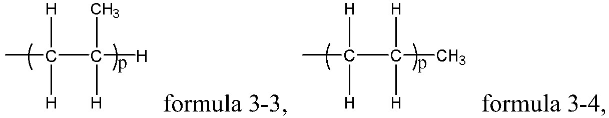

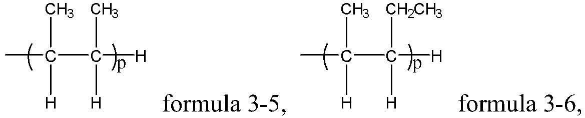

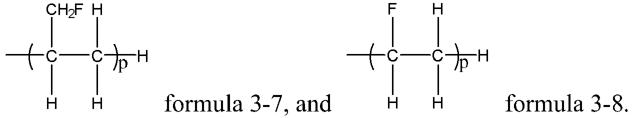

In each of the above embodiments, the halogen atom may include at least one of a fluorine atom, a chlorine atom, or a bromine atom. The above atoms can also improve the voltage resistance of the negative electrode dispersant and enhance the stability of the negative electrode film layer.

### [Substituted or Unsubstituted Amide Group]

In some embodiments, each of R₁ to R₅ independently includes a substituted or unsubstituted amide group, optionally a substituted or unsubstituted C3 to C150 amide group.

The amide group may include a monomeric amide group or a polyamide group. The amide group includes nitrogen, which is a strongly electronegative element. After the amide group is grafted onto the side chain of the carboxymethyl cellulose salt, it can substitute the hydrogen atom at the original hydroxyl position, thereby destroying the regular O-H-O hydrogen bond structure of the carboxymethyl cellulose salt and forming a new N-H-O hydrogen bond structure. The N-H-O hydrogen bond structure has a weaker interaction than the O-H-O hydrogen bond, thereby weakening the intermolecular force of the grafted modified carboxymethyl cellulose salt, increasing flexibility, and improving the interface performance of the negative electrode film layer. Moreover, the strongly electronegative element nitrogen can form a complexation effect with active ions in the battery system, such as lithium ions or sodium ions, thereby accelerating the transport rate of the active ions and improving the kinetic performance of the battery cell.

In some embodiments, the substituted or unsubstituted C3 to C150 amide group includes a structural formula represented by formula 4, 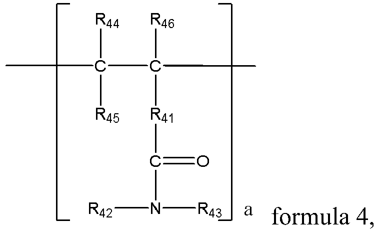
where in formula 4,
R₄₁ includes at least one of a single bond and a substituted or unsubstituted C1 to C5 methylene group;
R₄₂ to R₄₆ each independently include at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group; and
a is the number of repeating units, and a includes any positive integer from 1 to 30. a may be 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30.

Optionally, when the above group is substituted, the substituent may include at least one of a halogen atom, a hydroxyl group, or a carboxyl group, where the halogen atom may include at least one of a fluorine atom, a chlorine atom, a bromine atom, or an iodine atom.

In formula 4, either end of the amide group may be connected to the oxygen atom of a hydroxyl group in the carboxymethyl cellulose salt. For example, the left terminal group may be connected to the oxygen atom, or the right terminal group may be connected to the oxygen atom. The terminal group of the amide group in formula 4 that is not connected to the oxygen atom may include a hydrogen atom or a C1 to C3 alkyl group.

In some embodiments, R₄₁ includes a single bond, and the substituted or unsubstituted C3 to C150 amide group includes a structural formula represented by formula 4-1,

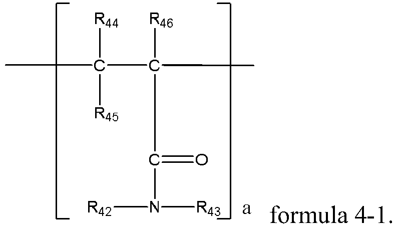

Exemplarily, the structural formula represented by formula 4-1 includes at least one of structural formulas represented by formula 4-11 to formula 4-15,

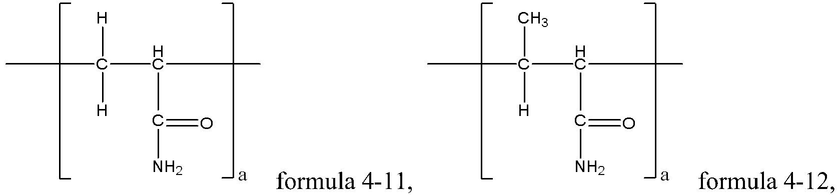

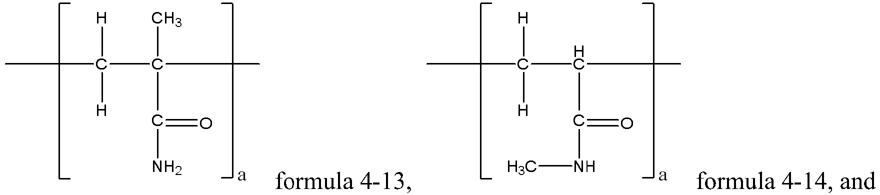

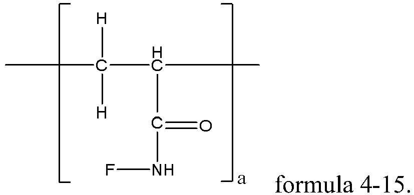

In some embodiments, R₄₁ includes a substituted or unsubstituted C1 to C5 methylene group, and the substituted or unsubstituted C3 to C150 amide group includes a structural formula represented by formula 4-2, 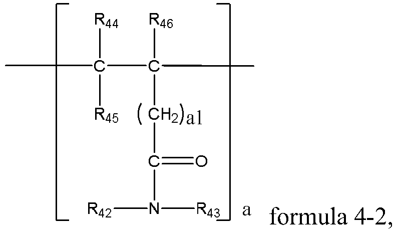 where a1 is the number of repeating units, and a1 includes any positive integer from 1 to 5. Exemplarily, a1 may be 1, 2, 3, 4, or 5.

In some embodiments, the structural formula represented by formula 4-2 includes at least one of structural formulas represented by formula 4-21 to formula 4-24,

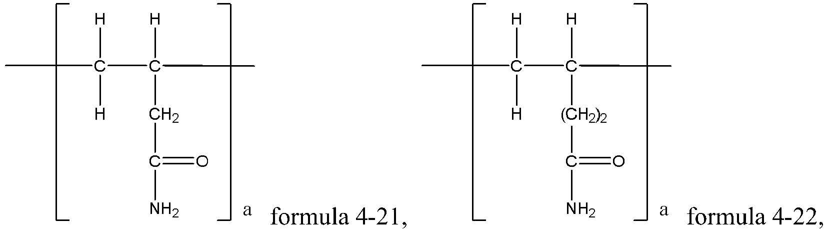

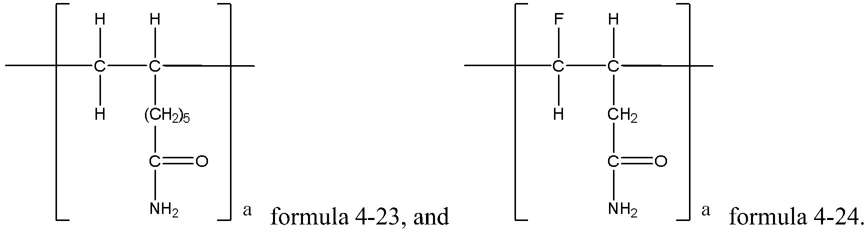

### [Substituted or Unsubstituted Ester Group]

In some embodiments, each of R₁ to R₅ independently includes a substituted or unsubstituted ester group, optionally a substituted or unsubstituted C3 to C150 ester group.

The ester group may include a monomeric ester group or a polyester group. After the ester group is grafted onto the side chain of the carboxymethyl cellulose salt, it can substitute the original hydroxyl position, thereby destroying the regular O-H-O hydrogen bond structure of the carboxymethyl cellulose salt and weakening the hydrogen bonding of the carboxymethyl cellulose salt itself, thereby weakening the intermolecular force of the grafted modified carboxymethyl cellulose salt, increasing flexibility, and improving the interface performance of the negative electrode film layer. Moreover, it can increase the migration rate of active ions, such as lithium ions. Furthermore, the ester group itself has good flexibility, and after substituting the hydroxyl position, it can further improve the flexibility of the carboxymethyl cellulose salt, thereby improving the interface performance of the negative electrode film layer.

In some embodiments, the substituted or unsubstituted C3 to C150 ester group includes a structural formula represented by formula 5, 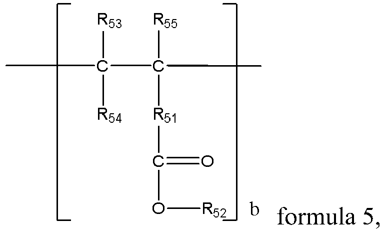
where in formula 5,
R₅₁ includes at least one of a single bond and a substituted or unsubstituted C1 to C5 methylene group;
R₅₂ includes a substituted or unsubstituted C1 to C5 alkyl group;
R₅₃ to R₅₅ each independently include at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group; and
b is the number of repeating units, and b includes any positive integer from 1 to 30. b may be 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30.

In formula 5, either end of the ester group may be connected to the oxygen atom of a hydroxyl group in the carboxymethyl cellulose salt. For example, the left terminal group may be connected to the oxygen atom, or the right terminal group may be connected to the oxygen atom. The terminal group of the ester group in formula 5 that is not connected to the oxygen atom may include a hydrogen atom or a C1 to C3 alkyl group.

In some embodiments, R₅₁ includes a single bond, and the substituted or unsubstituted C3 to C150 ester group includes a structural formula represented by formula 5-1,

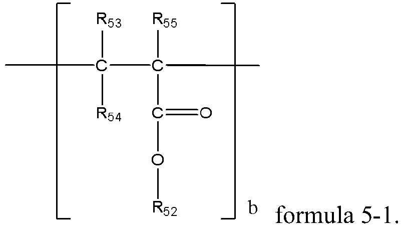

Exemplarily, the structural formula represented by formula 5-1 includes at least one of structural formulas represented by formula 5-11 to formula 5-16,

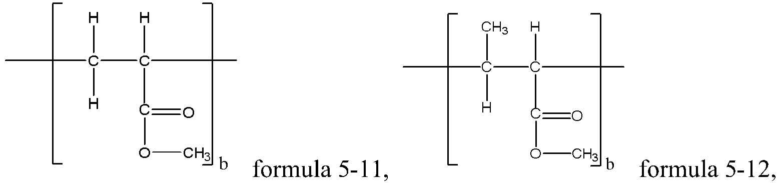

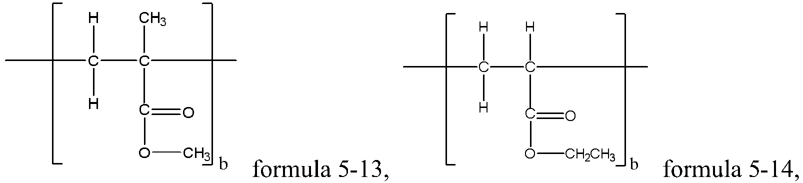

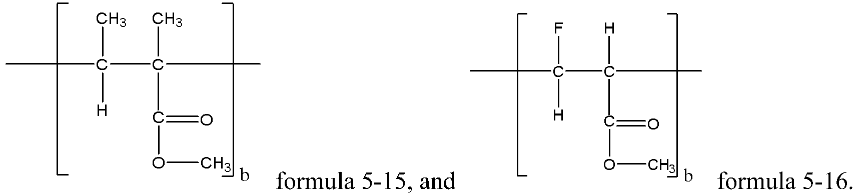

In some embodiments, R₅₁ includes a substituted or unsubstituted C1 to C5 methylene group, and the substituted or unsubstituted C3 to C150 ester group includes a structural formula represented by formula 5-2, 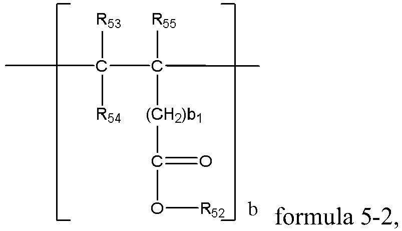 where b₁ is the number of repeating units, and b₁ includes any positive integer from 1 to 5. For example, b₁ may be 1, 2, 3, 4, or 5.

Exemplarily, the structural formula represented by formula 5-2 includes at least one of structural formulas represented by formula 5-21 to formula 5-28,

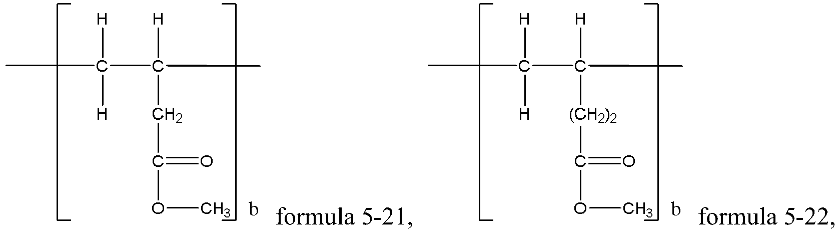

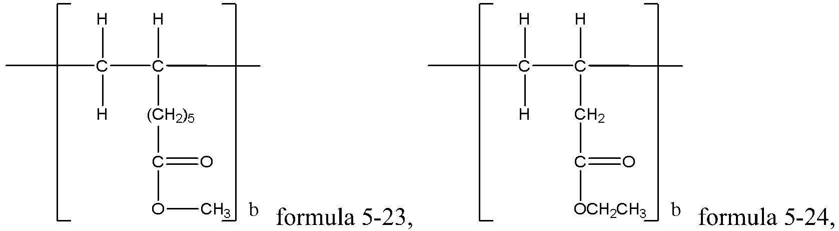

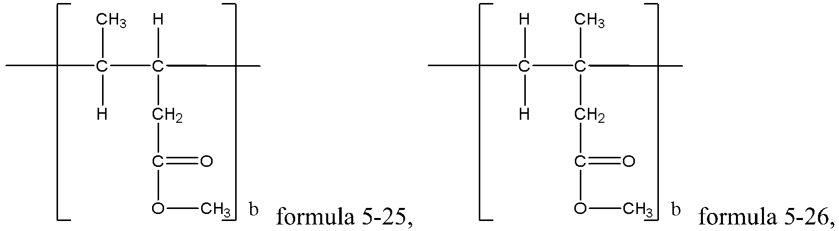

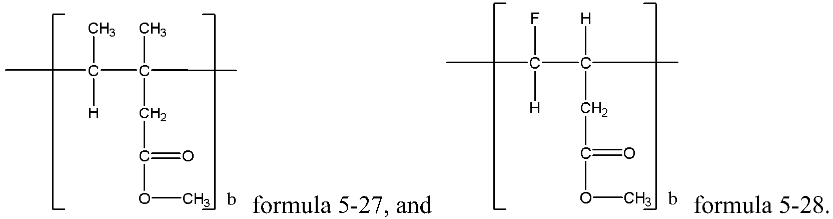

In each of the above embodiments, the halogen atom may include at least one of a fluorine atom, a chlorine atom, or a bromine atom. The above atoms can improve the voltage resistance of the polymer.

Exemplarily, the substituted or unsubstituted C3 to C150 ester group includes at least one of structural formulas represented by formula 5-21 to formula 5-28,

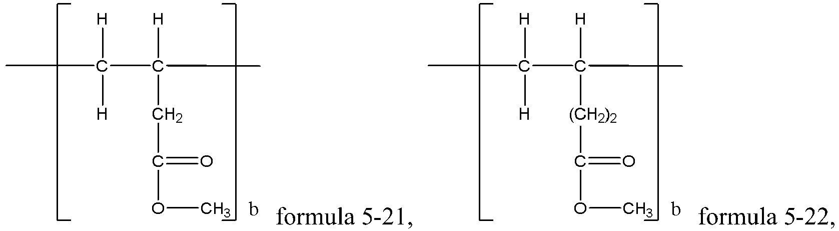

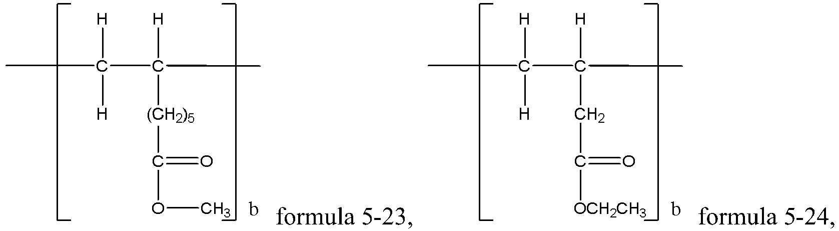

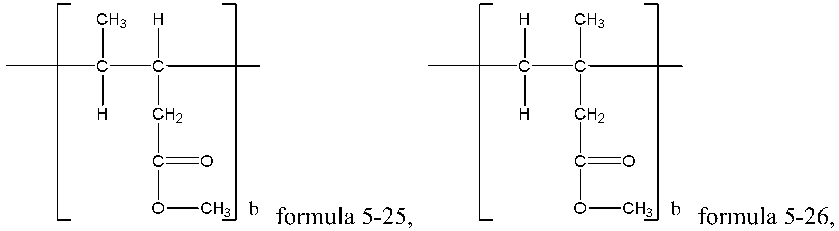

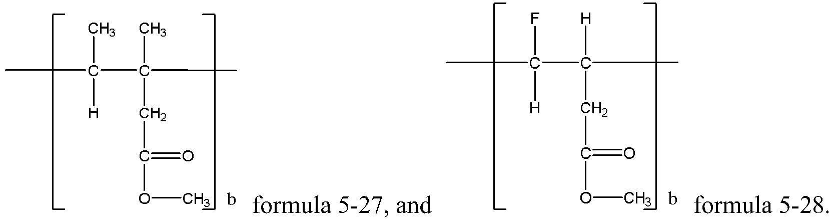

In each of the above embodiments, the flexible group has a weight average molecular weight of 15 Da to 5000 Da. The grafted group in the negative electrode dispersant has a relatively small molecular weight, which reduces the hydrogen bonding between molecular chains of the negative electrode dispersant, while providing good flexibility and ensuring good dispersibility of the negative electrode dispersant.

Exemplarily, the weight average molecular weight of the flexible group may be 15 Da, 20 Da, 25 Da, 30 Da, 35 Da, 40 Da, 45 Da, 50 Da, 55 Da, 60 Da, 65 Da, 70 Da, 75 Da, 80 Da, 85 Da, 90 Da, 95 Da, 100 Da, 120 Da, 150 Da, 200 Da, 250 Da, 300 Da, 350 Da, 400 Da, 450 Da, 500 Da, 550 Da, 600 Da, 650 Da, 700 Da, 750 Da, 800 Da, 850 Da, 900 Da, 950 Da, 1000 Da, 1050 Da, 1100 Da, 1150 Da, 1200 Da, 1250 Da, 1300 Da, 1350 Da, 1400 Da, 1450 Da, 1500 Da, 1550 Da, 1600 Da, 1650 Da, 1700 Da, 1750 Da, 1800 Da, 1850 Da, 1900 Da, 1950 Da, 2000 Da, 2050 Da, 2100 Da, 2150 Da, 2200 Da, 2250 Da, 2300 Da, 2350 Da, 2400 Da, 2450 Da, 2500 Da, 3000 Da, 3100 Da, 3200 Da, 3300 Da, 3400 Da, 3500 Da, 3600 Da, 3700 Da, 3800 Da, 3900 Da, 4000 Da, 4100 Da, 4200 Da, 4300 Da, 4400 Da, 4500 Da, 4600 Da, 4700 Da, 4800 Da, 4900 Da, 5000 Da, or within a range formed by any two of the above values.

In some embodiments, the modified carboxymethyl cellulose salt has a weight average molecular weight of 40 wDa to 80 wDa. When the weight average molecular weight of the modified carboxymethyl cellulose salt is within the above range, the negative electrode dispersant can have excellent dispersion performance.

Exemplarily, the weight average molecular weight of the modified carboxymethyl cellulose salt may be 40 wDa, 42 wDa, 45 wDa, 46 wDa, 48 wDa, 50 wDa, 52 wDa, 55 wDa, 58 wDa, 60 wDa, 62 wDa, 65 wDa, 68 wDa, 70 wDa, 72 wDa, 75 wDa, 78 wDa, 80 wDa, or within a range formed by any two of the above values.

In the present application, the weight average molecular weight of the polymer can be tested by a method known in the art, for example, by gel chromatography, such as by using a Waters 2695 Isocratic HPLC gel chromatograph with a differential refractive index detector 2141.

Conventional sodium carboxymethyl cellulose is a solid polymer at room temperature. The sodium carboxymethyl cellulose is dissolved in solvent water, with a mass content of the sodium carboxymethyl cellulose of 1%, stirred at 1200 rpm for 2 hours, and then dried in an oven, for example at 40°C, for more than 24 hours, to obtain a reference film. The reference film has a width of 2.5 cm, a length of 5 cm, and a thickness of 1 mm. The elongation at break of the reference film is tested, and the elongation at break of the reference film is defined as 100%. It needs to be stated that conventional sodium carboxymethyl cellulose refers to sodium carboxymethyl cellulose in which the side chains are not substituted by other groups, and in particular, the hydrogen atoms at the hydroxyl positions are not substituted.

In some embodiments, a modified carboxymethyl cellulose salt is prepared into a film. The modified carboxymethyl cellulose salt is dissolved in solvent water, with a mass content of the modified carboxymethyl cellulose salt being 1%, stirred at 1200 rpm for 2 hours, and then dried in an oven, for example at 40°C, for more than 24 hours, to obtain a film. The film has a width of 2.5 cm, a length of 5 cm, and a thickness of 1 mm. The elongation at break of the film is tested and calculated with the elongation at break of the reference film as 100%, and the elongation at break of the film is 200% to 300%, optionally 219% to 300%. During the preparation of the film, the thickness deviation of the film may be controlled within a range of 0.5%.

Therefore, the negative electrode dispersant has a higher elongation at break than that of conventional sodium carboxymethyl cellulose, and when the negative electrode dispersant is applied to a negative electrode sheet, it has good flexibility and is not prone to breakage.

Exemplarily, the elongation at break of the film may be 200%, 210%, 220%, 230%, 240%, 250%, 260%, 270%, 280%, 290%, 300%, or within a range formed by any two of the above values.

In the present application, the elongation at break of the film has its meaning well-known in the art, and can be tested using equipment and methods known in the art, and specifically, can be tested with reference to the standard GB/T 36363-2018.

The modified carboxymethyl cellulose salt may be prepared by the following method:

In some embodiments, the method includes step S100, i.e., alkalization treatment, and step S200, i.e., substitution treatment.

In step S100, the alkalization treatment specifically includes: providing a carboxymethyl cellulose salt, and subjecting the carboxymethyl cellulose salt to an alkalization treatment with an alkali to activate the hydroxyl sites of the carboxymethyl cellulose salt, thereby forming active reaction sites.

The carboxymethyl cellulose salt includes a compound represented by formula C, 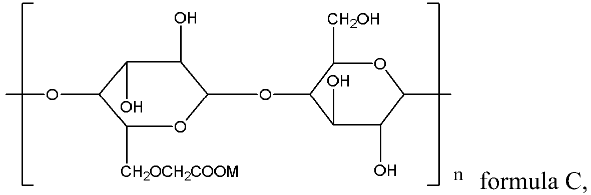 where in formula C, M includes at least one of a metal ion or NH₄⁺.

After the alkalization treatment of the carboxymethyl cellulose salt, the hydrogen atoms at the hydroxyl positions thereof are activated. For example, using sodium hydroxide (NaOH) or potassium hydroxide (KOH) for the alkalization treatment, the hydrogen atom in at least one hydroxyl position of the carboxymethyl cellulose salt is substituted with a sodium (Na) atom. For example, the hydrogen atoms at all hydroxyl positions of the carboxymethyl cellulose salt are substituted with Na, and the intermediate product after substitution is a compound represented by formula D,

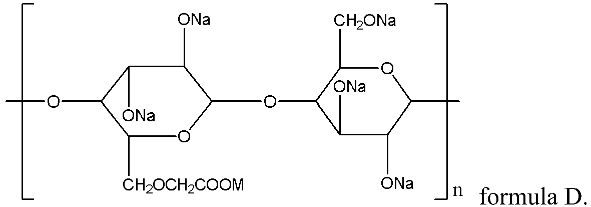

In some embodiments, the activated hydroxyl positions account for 0.05% to 20% of the total number of hydroxyl positions, optionally 1% to 5%. Correspondingly, the grafting rate of the flexible group and the conductive group is 0.05% to 20%, optionally 1% to 5%.

Specifically, the proportion of the total number of hydroxyl positions that are activated hydroxyl positions represents the proportion of substituted hydroxyl positions, which may correspond to the grafting rate of the flexible group and the conductive group. This may be detected using methods and equipment well known in the art. For example, it may be calculated based on the feed ratio of the carboxymethyl cellulose salt to the alkali, and then the respective grafting rates may be calculated based on the feed ratios of the flexible compound and the conductive compound.

In some embodiments, the grafting rate of the conductive group in the modified carboxymethyl cellulose salt is 0.05% to 20%; optionally 0.5% to 5%. When the grafting rate of the conductive group is within the above range, the conductivity of the modified carboxymethyl cellulose salt is further improved.

In some embodiments, the grafting rate of the flexible group in the modified carboxymethyl cellulose salt is 0.05% to 20%; optionally 0.5% to 5%. When the grafting rate of the flexible group is within the above range, the flexibility of the modified carboxymethyl cellulose salt is further improved, thereby improving the flexibility of the negative electrode film layer and reducing the risk of cracking thereof.

In step S200, the substitution treatment specifically includes: adding a substitution compound to the system to carry out a substitution reaction. The substitution compound substitutes the sodium (Na) atoms at the hydroxyl positions, and the product after substitution is the modified carboxymethyl cellulose salt, which is as shown in formula A above.

The substitution compound includes a conductive compound and a flexible compound.

In some embodiments, in step S200, the conductive compound may be added first for substitution, substituting the hydrogen atoms at a portion of the hydroxyl positions with a conductive group; then the flexible compound is added for substitution, substituting the hydrogen atoms at the hydroxyl positions not substituted by the conductive group with a flexible group.

In other embodiments, in step S200, the flexible compound may be added first for substitution, substituting the hydrogen atoms at a portion of the hydroxyl positions with a flexible group; and then the conductive compound is added for substitution, substituting the hydrogen atoms at the hydroxyl positions not substituted by the flexible group with a conductive group.

In some embodiments, the conductive compound includes a C2 to C150 conductive compound.

In some embodiments, the conductive compound includes one or more of an aromatic polymer and a polyalkyne.

In some embodiments, the aromatic polymer includes one or more of a five-membered heterocyclic polymer, an aromatic hydrocarbon derivative polymer, and a polyindole.

Exemplarily, the five-membered heterocyclic polymer includes one or more of polypyrrole, polythiophene-based polymers, and polyfuran. For example, the polythiophene-based polymer includes one or more of polythiophene and polyethylenedioxythiophene.

Exemplarily, the aromatic hydrocarbon derivative polymer includes one or more of polyacene, polyphenylene, polyphenylenevinylene, polyaniline, and aniline tetramer.

In some embodiments, the polyalkyne includes one or more of polyacetylene and polydiacetylene.

In some embodiments, the substitution compound includes a substituted or unsubstituted ether, optionally a substituted or unsubstituted C3 to C150 ether.

Exemplarily, the substituted or unsubstituted C3 to C150 ether includes a compound represented by formula 11, 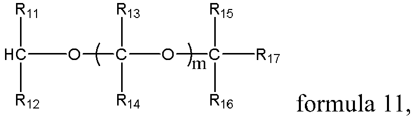
where in formula 11,
R₁₁ to R₁₇ each independently include at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group.
m includes any positive integer from 5 to 60.

In some embodiments, the substitution compound includes a substituted or unsubstituted alkane, optionally a substituted or unsubstituted C3 to C150 alkane.

Exemplarily, the substituted or unsubstituted C3 to C150 alkane includes a compound represented by formula 21, 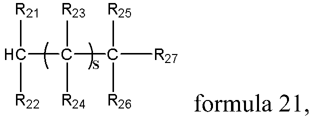
where in formula 21,
R₂₁ to R₂₇ each independently include at least one of a hydrogen atom, a halogen atom, and a substituted or unsubstituted C1 to C10 alkyl group; and
s includes any positive integer from 5 to 60.

In some embodiments, the substitution compound includes a substituted or unsubstituted polyolefin, optionally a substituted or unsubstituted C3 to C150 polyolefin.

Exemplarily, the substituted or unsubstituted C3 to C150 polyolefin includes a compound represented by formula 31, 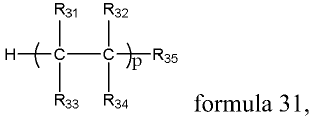
where in formula 31,
R₃₁ to R₃₄ each independently include at least one of a hydrogen atom, a halogen atom, a substituted or unsubstituted C1 to C10 alkyl group, and a substituted or unsubstituted C2 to C10 alkenyl group;
R₃₅ includes at least one of a hydrogen atom, a halogen atom, and a substituted or unsubstituted C1 to C10 alkyl group; and
p includes any positive integer from 5 to 60.

In some embodiments, the substitution compound includes a substituted or unsubstituted amide compound, optionally a substituted or unsubstituted C3 to C150 amide compound, which may be a C3 to C150 amide polymer.

Exemplarily, the substituted or unsubstituted C3 to C150 amide compound includes a compound represented by formula 41, 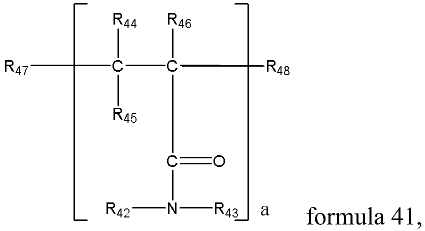
where in formula 41,
R₄₁ includes at least one of a single bond and a substituted or unsubstituted C1 to C5 methylene group;
R₄₂ to R₄₆ each independently include at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group; and
R₄₇ and R₄₈ each independently include a hydrogen atom or a C1 to C3 alkyl group.
a includes any positive integer from 1 to 30.

In some embodiments, the substitution compound includes a substituted or unsubstituted ester compound, optionally a substituted or unsubstituted C3 to C150 ester compound, and specifically may be a C3 to C150 ester polymer.

Exemplarily, the substituted or unsubstituted C3 to C150 ester compound includes a compound represented by formula 51, 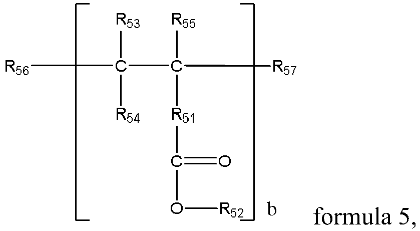
where in formula 5,
R₅₁ includes at least one of a single bond and a substituted or unsubstituted C1 to C5 methylene group;
R₅₂ includes a substituted or unsubstituted C1 to C5 alkyl group;
R₅₃ to R₅₅ each independently include at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group; and
R₅₆ and R₅₇ each independently include a hydrogen atom or a C1 to C3 alkyl group.
b includes any positive integer from 1 to 30.

In the preparation of the negative electrode dispersant, the reaction may be carried out under reaction conditions commonly used in the art, and the molar ratio of each raw material may also be selected according to the molar ratio commonly used in the art.

### Negative Electrode Dispersant

According to a second aspect, an embodiment of the present application provides a negative electrode dispersant. The negative electrode dispersant includes the modified carboxymethyl cellulose salt according to any one of the embodiments of the first aspect of the present application.

In some embodiments, the negative electrode dispersant may further include a carboxymethyl cellulose salt.

In some embodiments, the ratio of the mass content of the carboxymethyl cellulose salt to the mass content of the modified carboxymethyl cellulose salt may be 0.5 to 2. When the ratio of the mass content of the carboxymethyl cellulose salt to the mass content of the modified carboxymethyl cellulose salt is within the above range, the carboxymethyl cellulose salt and the modified carboxymethyl cellulose salt can work together to improve the flexibility of a film formed therefrom and reduce the risk of cracking of the negative electrode film layer.

Exemplarily, the ratio of the mass content of the carboxymethyl cellulose salt to the mass content of the modified carboxymethyl cellulose salt may be 0.5, 0.6, 0.7, 0.8, 0.9, 1, 1.1, 1.2, 1.3, 1.4, 1.5, 1.6, 1.7, 1.8, 1.9, 2, or within a range formed by any two of the above values.

### Negative Electrode Sheet

According to a third aspect, an embodiment of the present application provides a negative electrode sheet. The negative electrode sheet includes a negative electrode current collector and a negative electrode film layer provided on at least one surface of the negative electrode current collector. The negative electrode film layer includes the negative electrode dispersant according to any one of the embodiments of the second aspect of the present application. The negative electrode dispersant may be used as a dispersant in the negative electrode film layer, enabling the negative electrode active material to be uniformly dispersed in the negative electrode film layer, making the performance of the negative electrode film layer uniform. Moreover, the dispersant can also improve the flexibility of the negative electrode film layer and reduce the risk of cracking of the negative electrode film layer. Moreover, the negative electrode dispersant has excellent conductivity and can improve the conductivity of the negative electrode film layer. For example, the negative electrode current collector has two opposite surfaces in the thickness direction thereof, and the negative electrode film layer is provided on either one or both of the two opposite surfaces of the negative electrode current collector.

In some embodiments, based on the total mass of the negative electrode film layer, the mass content of the modified carboxymethyl cellulose salt is 0.8% to 1.3%, optionally 1.0% to 1.3%, and further optionally 1.0% to 1.2%. When the mass content of the modified carboxymethyl cellulose salt is within the above range, it can effectively reduce the risk of cracking of the negative electrode film layer, and effectively improve the performance uniformity and flexibility of the negative electrode film layer, and its proportion is relatively low, which basically does not affect the proportion of the negative electrode active material, thereby enabling the battery cell to have a high energy density. Moreover, since the modified carboxymethyl cellulose salt can significantly improve the flexibility of the negative electrode film layer and the like, it is not necessary to add auxiliary agents such as a plasticizer to the negative electrode slurry, thereby reducing the adverse effects caused by the introduction of a plasticizer.

Exemplarily, the mass content of the modified carboxymethyl cellulose salt may be 0.80%, 0.85%, 0.90%, 0.95%, 1.00%, 1.01%, 1.02%, 1.03%, 1.04%, 1.05%, 1.06%, 1.07%, 1.08%, 1.09%, 1.10%, 1.11%, 1.12%, 1.13%, 1.14%, 1.15%, 1.16%, 1.17%, 1.18%, 1.19%, 1.2%, 1.3%, or within a range formed by any two of the above values.

In some embodiments, the negative electrode dispersant in the negative electrode film layer may further include a carboxymethyl cellulose salt, such as at least one of sodium carboxymethyl cellulose, potassium carboxymethyl cellulose, lithium carboxymethyl cellulose, or the like. The difference between such carboxymethyl cellulose salts and the above modified carboxymethyl cellulose salt is that the hydroxyl groups in such carboxymethyl cellulose salts are not substituted. The carboxymethyl cellulose salt and the above modified carboxymethyl cellulose salt can jointly exert a dispersing effect, and on this basis, the modified carboxymethyl cellulose salt can additionally improve the flexibility of the negative electrode film layer.

In some embodiments, based on the total mass of the negative electrode film layer, the mass content of the carboxymethyl cellulose salt may be 0.05% to 1.0%, optionally 0.05% to 0.3%. When the mass content of the carboxymethyl cellulose salt is within the above range, it can work together with the modified carboxymethyl cellulose salt to improve the performance uniformity and flexibility of the negative electrode film layer, and the like.

Exemplarily, the mass content of the carboxymethyl cellulose salt may be 0.05%, 0.10%, 0.15%, 0.20%, 0.25%, 0.3%, 0.35%, 0.4%, 0.42%, 0.45%, 0.46%, 0.48%, 0.50%, 0.52%, 0.55%, 0.56%, 0.58%, 0.60%, 0.62%, 0.65%, 0.66%, 0.68%, 0.70%, 0.72%, 0.75%, 0.78%, 0.80%, 0.82%, 0.85%, 0.86%, 0.88%, 0.9%, 0.91%, 0.92%, 0.93%, 0.94%, 0.95%, 0.96%, 0.97%, 0.98%, 0.99%, 1.00%, or within a range formed by any two of the above values.

In some embodiments, the ratio of the mass content of the carboxymethyl cellulose salt to the mass content of the modified carboxymethyl cellulose salt may be 0.5 to 2. When the ratio of the mass content of the carboxymethyl cellulose salt to the mass content of the modified carboxymethyl cellulose salt is within the above range, the carboxymethyl cellulose salt and the modified carboxymethyl cellulose salt can work together to improve the performance uniformity and flexibility of the negative electrode film layer, and the like.

Exemplarily, the ratio of the mass content of the carboxymethyl cellulose salt to the mass content of the modified carboxymethyl cellulose salt may be 0.5, 0.6, 0.7, 0.8, 0.9, 1, 1.1, 1.2, 1.3, 1.4, 1.5, 1.6, 1.7, 1.8, 1.9, 2, or within a range formed by any two of the above values.

In some embodiments, the negative electrode film layer has a coating weight of 190 mg/1540.25 mm² to 235 mg/1540.25 mm², optionally 220 mg/1540.25 mm² to 235 mg/1540.25 mm². A relatively high coating weight of the negative electrode film layer facilitates achieving a heavy coating.

Exemplarily, the coating weight of the negative electrode film layer may be 190 mg/1540.25 mm², 200 mg/1540.25 mm², 210 mg/1540.25 mm², 220 mg/1540.25 mm², 230 mg/1540.25 mm², 235 mg/1540.25 mm², or within a range formed by any two of the above values.

The negative electrode active material may be a negative electrode active material known in the art for use in a battery cell. As an example, the negative electrode active material may include, but is not limited to, at least one of natural graphite, artificial graphite, soft carbon, hard carbon, a silicon-based material, a tin-based material, and lithium titanate. The silicon-based material may include at least one of elemental silicon, silicon oxide, a silicon-carbon composite, a silicon-nitrogen composite, and a silicon alloy material. The tin-based material may include at least one of elemental tin, a tin oxide, and a tin alloy material.

In some embodiments, the negative electrode active material may include, but is not limited to, at least one of natural graphite or artificial graphite, and the negative electrode dispersant can effectively disperse the above negative electrode active material, improving the dispersion uniformity of the negative electrode active material in the negative electrode film layer.

In some embodiments, the negative electrode film layer optionally further includes a negative electrode conductive agent. The embodiments of the present application have no particular limitation on the type of the negative electrode conductive agent. As an example, the negative electrode conductive agent may include at least one of superconducting carbon, conductive graphite, acetylene black, carbon black, Ketjen black, carbon dots, carbon nanotubes, graphene, and carbon nanofibers. In some embodiments, based on the total weight of the negative electrode film layer, the mass percentage content of the negative electrode conductive agent is ≤5%. Since the modified carboxymethyl cellulose salt has conductivity, it can serve as an auxiliary conductive agent, reducing the amount of negative electrode conductive agent used, which is beneficial for increasing the amount of negative electrode active material used and improving the energy density of the battery cell.

In some embodiments, the negative electrode film layer optionally further includes a negative electrode binder. The embodiments of the present application have no particular limitation on the type of the negative electrode binder. As an example, the negative electrode binder may include at least one of styrene-butadiene rubber (SBR), water-soluble unsaturated resin SR-1B, a water-based acrylic resin such as polyacrylic acid (PAA), polymethacrylic acid (PMAA), sodium polyacrylate (PAAS), polyacrylamide (PAM), polyvinyl alcohol (PVA), sodium alginate (SA), and carboxymethyl chitosan (CMCS). In some embodiments, based on the total weight of the negative electrode film layer, the mass percentage content of the negative electrode binder is ≤5%.

In some embodiments, the negative electrode film layer optionally further includes other auxiliary agents. As an example, the other auxiliary agents may include a thickener, such as a PTC thermistor material, or the like. In some embodiments, based on the total weight of the negative electrode film layer, the mass percentage content of the other auxiliary agents is ≤2%.

In some embodiments, the negative electrode current collector may be a metal foil or a composite current collector. As an example of the metal foil, a copper foil may be used. The composite current collector may include a polymer material base layer and a metal material layer formed on at least one surface of the polymer material base layer. As an example, the metal material may include at least one of copper, a copper alloy, nickel, a nickel alloy, titanium, a titanium alloy, silver, and a silver alloy. As an example, the polymer material base layer may include at least one of polypropylene (PP), polyethylene terephthalate (PET), polybutylene terephthalate (PBT), polystyrene (PS), and polyethylene (PE).

The negative electrode film layer is generally formed by coating a negative electrode slurry onto the negative electrode current collector, followed by drying and cold pressing. The negative electrode slurry is generally formed by dispersing a negative electrode active material, a negative electrode dispersant, an optional conductive agent, an optional binder, and other optional auxiliary agents in a solvent and stirring uniformly. The solvent may be N-methylpyrrolidone (NMP) or deionized water, but is not limited thereto.

The negative electrode sheet does not exclude other additional functional layers besides the negative electrode film layer. For example, in some embodiments, the negative electrode sheet according to the embodiments of the present application further includes a conductive primer layer, for example composed of a conductive agent and a binder, sandwiched between the negative electrode current collector and the negative electrode film layer and disposed on the surface of the negative electrode current collector. In other embodiments, the negative electrode sheet according to the embodiments of the present application further includes a protective layer covering the surface of the negative electrode film layer.

### Battery Cell

According to a fourth aspect, an embodiment of the present application provides a battery cell. The battery cell includes a negative electrode sheet. The negative electrode sheet includes the negative electrode sheet according to any one of the embodiments of the third aspect of the present application. Due to the use of this negative electrode sheet, the kinetic performance of the battery cell can be improved, among other things.

### [Positive Electrode Sheet]

In some embodiments, the battery cell further includes a positive electrode sheet.

The positive electrode sheet includes a positive electrode current collector and a positive electrode film layer provided on at least one surface of the positive electrode current collector. The positive electrode film layer includes a positive electrode active material.

As an example, the positive electrode current collector has two opposite surfaces in the thickness direction thereof, and the positive electrode film layer is provided on either one or both of the two opposite surfaces of the positive electrode current collector.

In some embodiments, the positive electrode current collector may be a metal foil or a composite current collector. For example, as the metal foil, an aluminum foil may be used. The composite current collector may include a polymer material substrate and a metal layer formed on at least one surface of the polymer material substrate. The composite current collector may be formed by depositing a metal material such as aluminum, an aluminum alloy, nickel, a nickel alloy, titanium, a titanium alloy, silver, a silver alloy, or the like on a polymer material substrate such as polypropylene (PP), polyethylene terephthalate (PET), polybutylene terephthalate (PBT), polystyrene (PS), polyethylene (PE), or the like.

In some embodiments, the positive electrode active material may include, but is not limited to, at least one of a lithium-containing transition metal oxide, a lithium-containing phosphate, and respective modified compounds thereof. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include, but are not limited to, at least one of lithium iron phosphate, a composite of lithium iron phosphate and carbon, lithium manganese phosphate, a composite of lithium manganese phosphate and carbon, lithium iron manganese phosphate, a composite of lithium iron manganese phosphate and carbon, and respective modified compounds thereof.

The positive electrode film layer includes a positive electrode active material, and the positive electrode active material may be a positive electrode active material known in the art for use in a battery cell. As an example, the positive electrode active material may include at least one of the following materials: a layered structure positive electrode active material, such as a ternary cathode material, lithium/sodium nickelate, lithium/sodium cobaltate, lithium/sodium manganate, lithium/sodium-rich layered material, rocksalt-phase layered material, or the like; an olivine-type phosphate active material; a spinel-structure positive electrode active material, such as spinel lithium manganate, spinel lithium nickel manganate, lithium-rich spinel lithium manganate, lithium nickel manganate, or the like.

Exemplarily, the general formula of the layered structure positive electrode active material is: LiₓA_{y}NiₐCo_{b}Mn_{c}M_{1-a-b-c}Y_{z}, where 0≤x≤2.1, 0≤y≤2.1, and 0.9≤x+y≤2.1; 0≤a≤1, 0≤b≤1, 0≤c≤1, and 0.1≤a+b+c≤1; 1.8≤z≤3.5; A is one or more selected from Na, K, and Mg; M is one or more selected from B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; Y is one or more selected from O and F. Optionally, y=0. Specifically, the layered structure positive electrode active material may include one or more of lithium cobalt oxide (LCO), lithium nickel oxide (LNO), lithium manganese oxide (LMO), LiNi_{1/3}Co_{1/3}Mn_{1/3}O₂(NCM333), LiNi_{0.8}Co_{0.1}Mn_{0.1}O₂(NCM811), and LiNi_{0.5}Co_{0.2}Mn_{0.3}O₂(NCM523).

Exemplarily, the general formula of the olivine-type phosphate active material is: LiₓA_{y}MeₐM_{b}P_{1-c}X_{c}Y_{z}, where 0≤x≤1.3, 0≤y≤1.3, and 0.9≤x+y≤1.3; 0.9≤a≤1.5, 0≤b≤0.5, and 0.9≤a+b≤1.5; 0≤c≤0.5; 3≤z≤5; A is one or more selected from Na, K, and Mg; Me is one or more selected from Mn, Fe, Co, and Ni; M is one or more selected from B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X is one or more selected from S, Si, Cl, B, C, and N; Y is one or more selected from O and F. Specifically, the olivine-type phosphate active material includes one or more of LiFePO₄, LiMnPO₄, LiNiPO₄, and LiCoPO₄.

Exemplarily, the general formula of the spinel-structure positive electrode active material is: LiₓA_{y}MnₐM₂₋ₐY_{z}, where 0≤x≤2, 0≤y≤1, and 0.9≤x+y≤2; 0.5≤a≤2; 3≤z≤5; A is one or more selected from Na, K, and Mg; M is one or more selected from Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; Y is one or more selected from O and F. Specifically, the spinel-structure positive electrode active material includes one or more of LiMn₂O₄, LiNi_{0.5}Mn_{1.5}O₄, LiCr_{0.3}Mn_{1.7}O₄, Li_{1.1}Al_{0.1}Mn_{1.9}O₄, Li₂Mn₂O₄, and Li_{1.5}Mn₂O₄.

In the present application, the modified compounds of the positive electrode active materials described above may be obtained by doping modification and/or surface coating modification of the positive electrode active material.

In some embodiments, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, based on the total weight of the positive electrode film layer, the mass percentage content of the binder is ≤5%.

In some embodiments, the positive electrode film layer optionally further includes a conductive agent. As an example, the conductive agent may include at least one of superconducting carbon, acetylene black, carbon black, Ketjen black, carbon dot, carbon nanotube, graphene, and carbon nanofiber. In some embodiments, based on the total weight of the positive electrode film layer, the mass percentage content of the conductive agent is ≤5%.

In some embodiments, the positive electrode sheet may be prepared by the following method: dispersing the above components for preparing the positive electrode sheet, such as a positive electrode active material, an optional conductive agent, an optional binder, and any other components, in a solvent such as N-methylpyrrolidone to form a positive electrode slurry; and coating the positive electrode slurry onto the positive electrode current collector, followed by processes such as drying and cold pressing, to obtain the positive electrode sheet.

### [Electrolyte]

In some embodiments, the battery cell further includes an electrolyte.

During the charge-discharge process of the battery cell, active ions are intercalated and deintercalated back and forth between the positive electrode sheet and the negative electrode sheet, and the electrolyte serves to conduct the active ions between the positive electrode sheet and the negative electrode sheet. The present application has no particular limitation on the type of the electrolyte, which may be selected according to actual needs.

The electrolyte includes an electrolyte salt and a solvent. The types of the electrolyte salt and the solvent are not particularly limited, and may be selected according to actual needs.

As an example, the electrolyte salt may include, but is not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS), and ethylsulfonylethane (ESE).

In some embodiments, the electrolyte optionally further includes an additive. For example, the additive may include a positive electrode film-forming additive, and may also include additives capable of improving certain performance of the battery, such as an additive for improving overcharge performance of the battery, an additive for improving high-temperature performance of the battery, an additive for improving low-temperature power performance of the battery, and the like.

### [Separator]

In some embodiments, the battery cell further includes a separator.

The present application has no particular limitation on the type of the separator, and any known porous separator with good chemical stability and mechanical stability may be selected.

In some embodiments, the material of the separator may include at least one of glass fiber, non-woven fabric, polyethylene, polypropylene, and polyvinylidene fluoride. The separator may be a single-layer film or a multi-layer composite film, and there is no particular limitation. When the separator is a multi-layer composite film, the materials of the layers may be the same or different, and there is no particular limitation.

In some embodiments, the positive electrode sheet, the separator, and the negative electrode sheet may be formed into an electrode assembly by a winding process and/or a stacking process.

In some embodiments, the battery cell may include an outer package. The outer package can be used to encapsulate the electrode assembly and the electrolyte.

In some embodiments, the outer package of the battery cell may be a hard case, such as a hard plastic case, an aluminum case, a steel case, or the like. The outer package of the battery cell may also be a soft package, such as a pouch-type soft package. The material of the soft package may be a plastic, such as at least one of polypropylene (PP), polybutylene terephthalate (PBT), and polybutylene succinate (PBS).

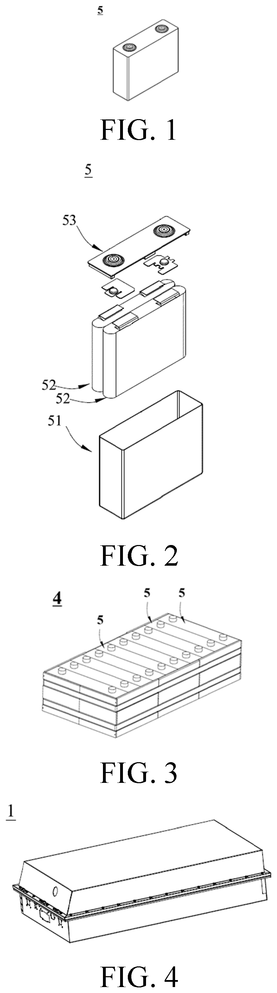

The present application has no particular limitation on the shape of the battery cell, which may be cylindrical, square, or any other shape. FIG. 1 is a schematic diagram of a battery cell 5 having a square structure as an example.

In some embodiments, as shown in FIG. 2, the outer package may include a case 51 and a cover plate 53. The case 51 may include a bottom plate and side plates connected to the bottom plate. The bottom plate and the side plates enclose to form an accommodating cavity. The case 51 has an opening in communication with the accommodating cavity. The cover plate 53 is used for covering the opening to close the accommodating cavity. The positive electrode sheet, the negative electrode sheet, and the separator may be formed into an electrode assembly 52 by a winding process and/or a stacking process. The electrode assembly 52 is encapsulated in the accommodating cavity. The electrolyte infiltrates the electrode assembly 52. The number of electrode assemblies 52 contained in the battery cell 5 may be one or more, which may be adjusted according to requirements.

A preparation method of the battery cell of the present application is well known in the art. In some embodiments, the positive electrode sheet, the separator, the negative electrode sheet, and the electrolyte may be assembled to form a battery cell. As an example, the positive electrode sheet, the separator, and the negative electrode sheet may be formed into an electrode assembly by a winding process and/or a stacking process, the electrode assembly may be placed in an outer package, and after drying, the electrolyte may be injected, followed by processes such as vacuum sealing, standing, formation, and shaping to obtain a battery cell.

In some embodiments of the present application, the battery cells according to the present application may be assembled into a battery module. The number of battery cells contained in the battery module may be multiple. The specific number may be adjusted according to the application and capacity of the battery module.

FIG. 3 is a schematic diagram of a battery module 4 as an example. As shown in FIG. 3, in the battery module 4, the plurality of battery cells 5 may be arranged in sequence along the length direction of the battery module 4. Of course, they may also be arranged in any other manner. Further, the plurality of battery cells 5 may be fixed by fasteners.

Optionally, the battery module 4 may further include a housing having an accommodating space, and the plurality of battery cells 5 are accommodated in the accommodating space.

In some embodiments, the battery modules may be further assembled to form a battery pack, and the number of the battery modules included in the battery pack may be adjusted according to the application and capacity of the battery pack.

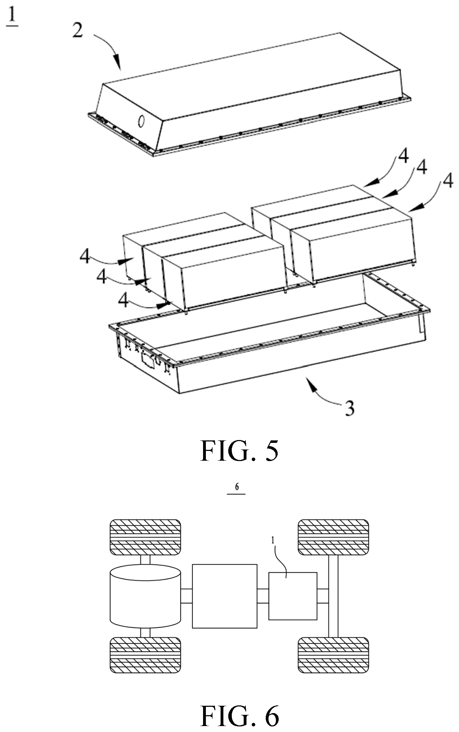

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box 2 and a lower box 3. The upper box 2 is used for covering the lower box 3 to form an enclosed space for accommodating the battery modules 4. The plurality of battery modules 4 may be arranged in the battery box in any way.

The battery according to the embodiments of the present application may include one battery cell or a plurality of battery cells. In the case where the battery includes a plurality of battery cells, the battery may include a battery module or a battery pack.

### Electric Device

According to a fifth aspect, an embodiment of the present application provides an electric device. The electric device includes at least one of the battery cell, the battery module, or the battery pack according to the present application. The battery cell, the battery module, or the battery pack may be used as a power source for the electric device, and may also be used as an energy storage unit for the electric device. The electric device may be, but is not limited to, a mobile device such as a mobile phone and a laptop; an electric vehicle such as an all-electric vehicle, a hybrid electric vehicle, a plug-in hybrid electric vehicle, an electric bicycle, an electric scooter, an electric golf cart, and an electric truck; an electric train; a ship; a satellite; and an energy storage system.

The electric device may select a battery cell, a battery module, or a battery pack according to its usage requirements.

FIG. 6 is a schematic diagram of an electric device 6 as an example. The electric device 6 is an all-electric vehicle, a hybrid electric vehicle, a plug-in hybrid electric vehicle, or the like. In order to meet the requirements of the electric device 6 for high power and high energy density, a battery pack 1 or a battery module may be used.

As another example, the electric device may be a mobile phone, a tablet computer, a laptop computer, or the like. Such an electric device generally needs to be light and thin, and a battery cell may be used as a power source.

### Examples

The following examples provide a more specific description of the content disclosed in the present application. These examples are only used for illustrative purposes, as various modifications and changes within the scope of the content disclosed in the present application are obvious to those skilled in the art. Unless otherwise stated, all parts, percentages, and ratios described in the following examples are based on mass, all reagents used in the examples are commercially available or synthesized by conventional methods and can be used directly without further treatment, and all instruments used in the examples are commercially available.

### Example 1 Preparation of Lithium-Ion Battery

### 1) Preparation of positive electrode sheet

An aluminum foil was used as the positive electrode current collector.

The positive electrode active material lithium cobalt oxide (LiCoO₂), the conductive agent acetylene black, and the binder polyvinylidene fluoride (PVDF) were mixed uniformly in a mass ratio of 95:2:3 in an appropriate amount of the solvent N-methylpyrrolidone (NMP) to obtain a positive electrode slurry. The positive electrode slurry was coated onto the positive electrode current collector (aluminum foil), and then subjected to processes such as drying, cold pressing, slitting, and cutting to obtain a positive electrode sheet.

### (2) Preparation of negative electrode sheet

A copper foil was used as the negative electrode current collector.

Artificial graphite as a negative electrode active material, conductive carbon as a conductive agent, a styrene-acrylate emulsion as a binder, and a negative electrode dispersant were mixed uniformly in deionized water to prepare a negative electrode slurry. In the solid content of the negative electrode slurry, the mass ratio of the artificial graphite, the conductive carbon, the styrene-acrylate binder, and the negative electrode dispersant was 96.7:0.7:1.5:1.1, and the negative electrode dispersant included modified CMC-Na. The negative electrode slurry was coated onto the copper foil current collector, dried at 85°C, and cold-pressed to obtain a negative electrode sheet having a negative electrode active material layer.

### 3) Preparation of electrolyte

In an environment with a water content of less than 10 ppm, the organic solvents ethylene carbonate (EC), ethyl methyl carbonate (EMC), and diethyl carbonate (DEC) were mixed in a volume ratio of 1:1:1 to obtain an electrolyte solvent. Subsequently, the lithium salt, lithium hexafluorophosphate, was mixed with the resulting solvent at a concentration of 1 mol/L.

### 4) Preparation of lithium-ion battery

The positive electrode sheet, the polyethylene (PE) separator, and the negative electrode sheet were stacked and wound in sequence to obtain an electrode assembly. The electrode assembly was placed in an outer package, dried, and then injected with the electrolyte. After processes such as vacuum sealing, standing, formation, and shaping, a lithium-ion battery was obtained.

### Examples 2-1 to 2-4

The difference from Example 1 was that the type of flexible group in the negative electrode dispersant in the negative electrode slurry was different.

### Examples 3-1 to 3-3

The difference from Example 1 was that the type of conductive group in the negative electrode dispersant in the negative electrode slurry was different.

### Examples 4-1 and 4-2

The difference from Example 1 was that the number of repeating units of the flexible group in Example 4-1 was different.

The difference from Example 1 was that the number of repeating units of the conductive group in Example 4-2 was different.

### Comparative Example 1

The difference from Example 1 was that a negative electrode dispersant was added to the negative electrode slurry, and the negative electrode dispersant was replaced with sodium carboxymethyl cellulose (CMC-Na). In the solid content of the negative electrode slurry, the mass ratio of the artificial graphite to the conductive carbon to the styrene-acrylate binder to the negative electrode dispersant CMC-Na was 96.7:0.7:1.5:1.1.

### Comparative Example 2

The difference from Example 1 was that a negative electrode dispersant was added to the negative electrode slurry, the negative electrode dispersant was replaced with sodium carboxymethyl cellulose (CMC-Na), and a plasticizer was added to the negative electrode slurry. In the solid content of the negative electrode slurry, the mass ratio of the artificial graphite to the conductive carbon to the styrene-acrylate binder to the negative electrode dispersant CMC-Na to the plasticizer butanediol was 96.55:0.7:1.5:1.1:0.15.

**The relevant parameters of the examples and the comparative examples are shown in Table 1.**

### Test Procedures

### 1. Negative electrode slurry filterability test:

A 150-mesh filter screen was used, and the filter screen was cut into a size of 25 cm × 25 cm with scissors. The 150-mesh filter screen was folded into a fan shape, and fixed suspended over the opening of a clean beaker. 500 mL of the negative electrode slurry was poured all at once from above the filter screen. Timing was started when the negative electrode slurry began to flow out from the tip of the filter screen. The filtration time for 300 mL was recorded.

### 2. Negative electrode slurry gelation and sedimentation state:

500 mL of the negative electrode slurry was taken, and it was observed whether the slurry exhibited a jelly-like gelation state after being left for different periods of time. The viscosity of the slurry was tested. If the viscosity of the slurry at the upper layer of the test beaker decreased and the slurry at the lower layer became thicker, it was determined that slurry sedimentation had occurred.

### 3. Coating weight of negative electrode film layer:

The coating window represents the approximate critical range for the quality stability of a coated product. Exceeding this range leads to defects such as cracking. Coating was performed using an extrusion coater at a speed of 50 m/min. As the coating weight of the negative electrode sheets of the comparative examples and the examples gradually in quality, it was observed whether the film layer cracked. If no cracking occurred, the coating weight was continuously increased until cracking appeared on the surface of the electrode sheet film layer. The maximum coating weight at which the negative electrode film layer did not crack was recorded. This value was the coating weight of the negative electrode film layer shown in Table 1.

### 4. Direct Current Impedance Test of Lithium-Ion Battery

The battery direct current impedance test procedure was as follows: At 25°C, the lithium-ion batteries prepared in the examples and the comparative examples were each charged at a constant current of 1/3 C to 4.2 V, and then charged at a constant voltage of 4.2 V until the current was 0.05 C. After standing for 5 min, the voltage V1 was recorded. Then, the batteries were discharged at 1/3 C for 30 s, and the voltage V2 was recorded. The internal resistance DCR of the lithium-ion battery was obtained as (V2-V1)/(1/3C).

### Test Results

See Table 1 for test results.

**Table 1**

| Item | Negative electrode film layer | | | | | | Elongation at break of negative electrode dispersant % | Lithium-ion battery Direct current impedance DCR/mΩ |
|---|---|---|---|---|---|---|---|---|
| | Negative electrode dispersant | | | | Slurry filtration time/s@300 mL | Coating weight/mg/ 1540.25 mm² | | |
| | Flexible group | | Conductive group | | | | | |
| | Type | Number of repeating units | Type | Number of repeating units | | | | |
| Example 1 | Formula 1-1 | 35 | Polyacetylenyl group | 30 | 65 | 220 | 220 | 498 |
| Example 2-1 | Formula 2-10 | 35 | Polyacetylenyl group | 30 | 70 | 230 | 230 | 498 |
| Example 2-2 | Formula 3-1 | 35 | Polyacetylenyl group | 30 | 65 | 220 | 232 | 498 |
| Example 2-3 | Formula 4-11 | 35 | Polyacetylenyl group | 30 | 72 | 230 | 235 | 498 |
| Example 2-4 | Formula 5-16 | 25 | Polyacetylenyl group | 10 | 66 | 220 | 220 | 510 |
| Example 3-1 | Formula 1-1 | 35 | Polythienyl group | 35 | 59 | 220 | 237 | 488 |
| Example 3-2 | Formula 1-1 | 35 | Polyaniline group | 35 | 70 | 220 | 220 | 492 |
| Example 3-3 | Formula 1-1 | 35 | Polyphenylene group | 35 | 72 | 220 | 219 | 491 |
| Example 4-1 | Formula 1-1 | 60 | Polyacetylenyl group | 60 | 60 | 235 | 250 | 480 |
| Example 4-2 | Formula 1-1 | 35 | Polyacetylenyl group | 45 | 71 | 220 | 230 | 485 |
| Comparative Example 1 | None | None | None | None | 70 | 100 | 100 | 540 |
| Comparative Example 2 | None | None | None | None | 85 | 200 | 150 | 550 |

The weight average molecular weight of the negative electrode dispersant in the examples and the comparative examples was 60 wDa.

The number of repeating units in the flexible group refers to the number of continuously repeating groups in the flexible group, for example, the value of m in formula 1-1, the value of s in formula 2-10, the value of p in formula 3-1, the value of a in formula 4-11, and the value of b in formula 5-16. The number of repeating units in the conductive group refers to the degree of polymerization of the conductive group.

For the above examples and comparative examples, after gelation and sedimentation tests, the negative electrode slurry has no sedimentation and no gelation, and the state of the negative electrode slurry is relatively stable.

It can be seen from Table 1 that in Comparative Example 1, the dispersant sodium carboxymethyl cellulose (CMC-Na) is added to the negative electrode slurry. This sodium carboxymethyl cellulose is not side-chain modified. It is beneficial for improving the dispersion performance of the negative electrode active material in the negative electrode slurry. However, due to the hydrogen bonding of sodium carboxymethyl cellulose itself, during the process of drying the negative electrode slurry into a negative electrode film layer, problems such as cracking of the negative electrode film layer are likely to occur, which is unfavorable for heavy coating of the negative electrode slurry, and results in a small coating weight.

Compared with Comparative Example 1, in Comparative Example 2, a plasticizer is further added to the negative electrode slurry. The plasticizer can effectively improve the moldability and flexibility of the negative electrode film layer, is favorable for heavy coating of the negative electrode slurry, increases the coating weight thereof, and can alleviate the cracking of the negative electrode film layer. However, it is found through testing that the negative electrode film layer to which the plasticizer is added has a non-uniform thickness and relatively high impedance.

In contrast, in the embodiments of the present application, no plasticizer is added to the negative electrode slurry. The dispersant sodium carboxymethyl cellulose is subjected to side-chain graft modification, which can reduce the hydrogen bonding of the dispersant, weaken the interaction force between the molecular chains of the dispersant, enhance the flexibility of the negative electrode dispersant, improve the flexibility of the negative electrode film layer, reduce the risk of cracking of the negative electrode film layer, particularly reduce the risk of cracking of a negative electrode film layer with a heavy coating weight, and increase the energy density of the battery cell. Moreover, the modified carboxymethyl cellulose salt has good dispersing and leveling effects, and can effectively disperse the negative electrode active material, so that the negative electrode active material is uniformly dispersed, and the negative electrode film layer has a uniform thickness distribution and uniform performance. Furthermore, it can further reduce the impedance of the negative electrode film layer, with the impedance ranging from 450 mΩ to 510 mΩ, thereby improving the kinetic performance of the lithium-ion battery.

In the embodiments of the present application, when side-chain graft modification is performed, at least one of an ether group, an alkyl group, an alkenyl group, an amide group, or an ester group can be used for graft modification, all of which can effectively improve the flexibility of the modified carboxymethyl cellulose salt and can improve the flexibility of the negative electrode film layer, so that the negative electrode film layer has a uniform thickness distribution and uniform performance.

The embodiments of the present application are applicable to a variety of conductive groups, such as one or more of an aromatic polymer group and a polyalkynyl group, all of which can effectively improve the flexibility of the negative electrode film layer and can reduce the impedance of the negative electrode film layer.

In the embodiments of the present application, by adjusting the number of repeating units, the flexibility of the negative electrode film layer can be effectively increased, and the conductivity of the negative electrode film layer can also be improved to some extent.

In the embodiments of the present application, by adjusting the addition amount of the dispersant in the negative electrode slurry, the degree of heavy coating of the negative electrode slurry can be effectively adjusted, the flexibility of the negative electrode film layer can be improved, and the impedance of the negative electrode film layer can be reduced, among other things.

In the present application, multiple detections are performed on the negative electrode sheet of Example 1. For example, ion polishing cross-section elemental analysis (CP) is performed on 10 locations of the negative electrode sheet with reference to GB/T 17359-2012 to confirm the thickness of the negative electrode film layer in the negative electrode sheet. The thickness deviation of the negative electrode film layer obtained from the 10 tests is controlled within a range of 0.5%, indicating that the negative electrode film layer in the negative electrode sheet has a uniform thickness and high thickness consistency.

In the present application, 10 lithium-ion batteries are prepared using the method of Example 1. For each lithium-ion battery, the average thickness of the negative electrode film layer is measured. Specifically, ion polishing cross-section elemental analysis (CP) is performed with reference to GB/T 17359-2012 to measure the thickness of the negative electrode film layer at 10 locations of the negative electrode sheet, and the average value is calculated as the average thickness of the negative electrode film layer for that lithium-ion battery. The thickness deviation of the negative electrode film layers of the 10 lithium-ion batteries is controlled within a range of 0.5%.

Although illustrative embodiments have been demonstrated and described, those skilled in the art should understand that the above embodiments cannot be construed as limiting the present application, and changes, substitutions, and modifications may be made to the embodiments without departing from the spirit, principle, and scope of the present application.

## Claims

1. A battery cell, comprising a negative electrode sheet, wherein the negative electrode sheet comprises a negative electrode current collector and a negative electrode film layer provided on at least one side of the negative electrode current collector, the negative electrode film layer comprises a negative electrode active material and a negative electrode dispersant, the negative electrode dispersant comprises a modified carboxymethyl cellulose salt, the modified carboxymethyl cellulose salt comprises a conductive group and a flexible group, and the flexible group comprises at least one of a substituted or unsubstituted ether group, a substituted or unsubstituted alkyl group, a substituted or unsubstituted polyolefin group, a substituted or unsubstituted amide group, and a substituted or unsubstituted ester group.

2. The battery cell according to claim 1, wherein the modified carboxymethyl cellulose salt comprises a compound represented by formula A, 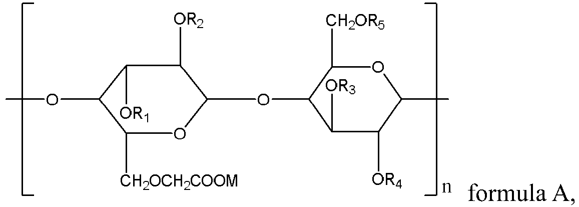
where in formula A,
M comprises at least one of a metal ion or NH₄⁺;
R₁ to R₅ each independently comprise a hydrogen atom, a conductive group, or a flexible group, at least one of R₁ to R₅ comprises a conductive group, and at least another one thereof comprises a flexible group; and
n comprises any positive integer from 1500 to 3000.

3. The battery cell according to claim 1 or 2, wherein the conductive group comprises one or more of an aromatic polymer group and a polyalkynyl group.

4. The battery cell according to claim 3, wherein the aromatic polymer group comprises one or more of a five-membered heterocyclic polymer group, an aromatic hydrocarbon derivative polymer group, and a polyindolyl group; and/or
the polyalkynyl group comprises one or more of a polyacetylenyl group and a polydiacetylenyl group.

5. The battery cell according to claim 4, wherein the five-membered heterocyclic polymer group comprises one or more of a polypyrrolyl group, a polythiophene-based group, and a polyfuranyl group; and/or
the aromatic hydrocarbon derivative polymer group comprises one or more of a polyacenyl group, a polyphenylene group, a polyphenylenevinylene group, a polyaniline group, and an aniline tetramer group.

6. The battery cell according to any one of claims 3 to 5, wherein the aromatic polymer group has a degree of polymerization of 2 to 50; and/or the polyalkynyl group has a degree of polymerization of 2 to 50.

7. The battery cell according to any one of claims 1 to 6, wherein the flexible group comprises at least one of a substituted or unsubstituted C3 to C150 ether group, a substituted or unsubstituted C3 to C150 alkyl group, a substituted or unsubstituted C3 to C150 polyolefin group, a substituted or unsubstituted C3 to C150 amide group, and a substituted or unsubstituted C3 to C150 ester group.

8. The battery cell according to claim 7, wherein the substituted or unsubstituted C3 to C150 ether group comprises a structural formula represented by formula 1, 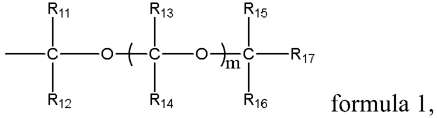
where in formula 1, R₁₁ to R₁₇ each independently comprise at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group; and
m comprises any positive integer from 5 to 60.

9. The battery cell according to claim 7 or 8, wherein the substituted or unsubstituted C3 to C150 ether group comprises at least one of structural formulas represented by formula 1-1 to formula 1-14, 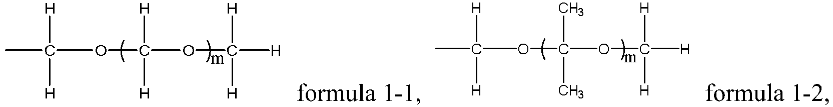 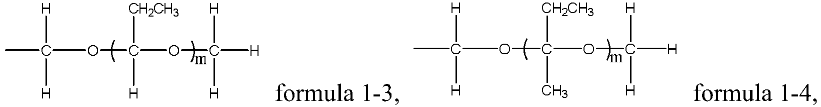 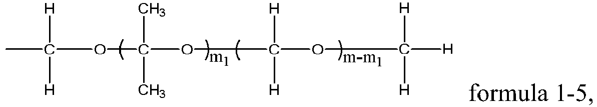 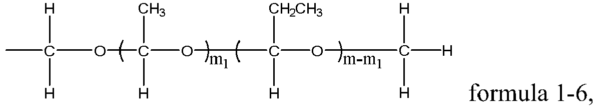 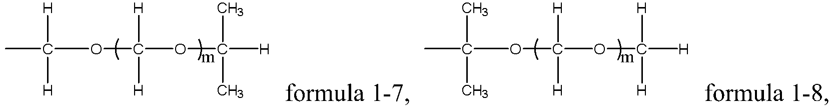 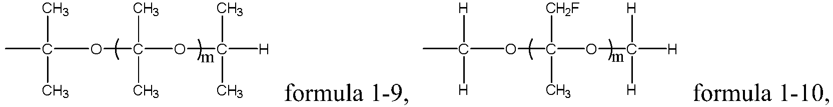 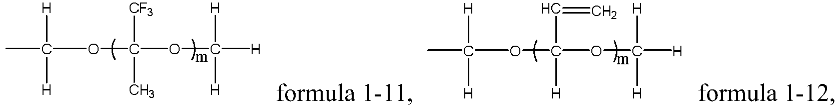 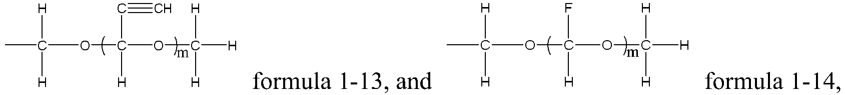 where m₁ comprises any positive integer from 1 to 30.

10. The battery cell according to any one of claims 7 to 9, wherein the substituted or unsubstituted C3 to C150 alkyl group comprises a structural formula represented by formula 2, 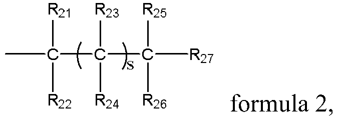
where in formula 2,
R₂₁ to R₂₇ each independently comprise at least one of a hydrogen atom, a halogen atom, and a substituted or unsubstituted C1 to C10 alkyl group; and
s comprises any positive integer from 5 to 60.

11. The battery cell according to any one of claims 7 to 10, wherein the substituted or unsubstituted C3 to C150 alkyl group comprises at least one of structural formulas represented by formula 2-1 to formula 2-11, 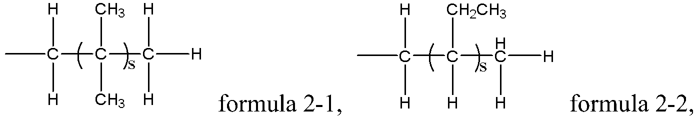 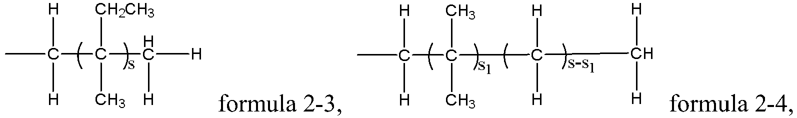 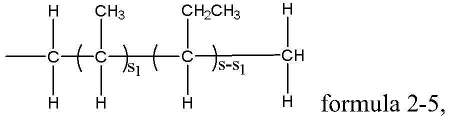 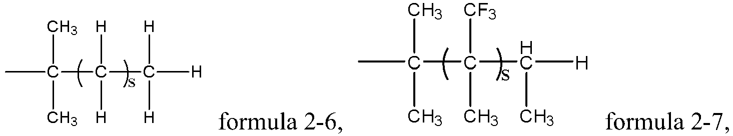 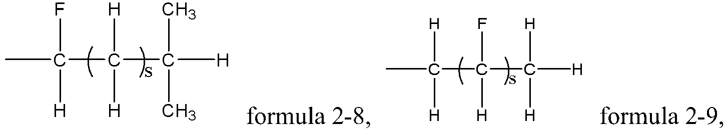 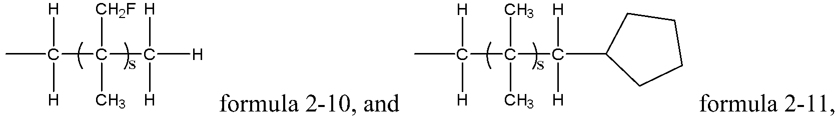 where s₁ comprises any positive integer from 1 to 30.

12. The battery cell according to any one of claims 7 to 11, wherein the substituted or unsubstituted C3 to C150 polyolefin group comprises a structural formula represented by formula 3, 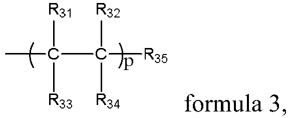
where in formula 3,
R₃₁ to R₃₄ each independently comprise at least one of a hydrogen atom, a halogen atom, a substituted or unsubstituted C1 to C10 alkyl group, and a substituted or unsubstituted C2 to C10 alkenyl group;
R₃₅ comprises at least one of a hydrogen atom, a halogen atom, and a substituted or unsubstituted C1 to C10 alkyl group; and
p comprises any positive integer from 5 to 60.

13. The battery cell according to any one of claims 7 to 11, wherein the substituted or unsubstituted C3 to C150 polyolefin group comprises at least one of structural formulas represented by formula 3-1 to formula 3-8,

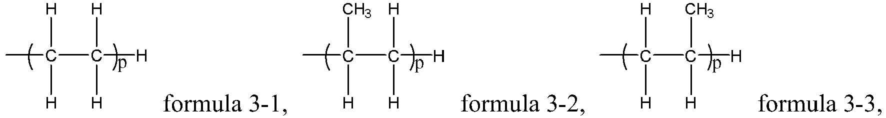

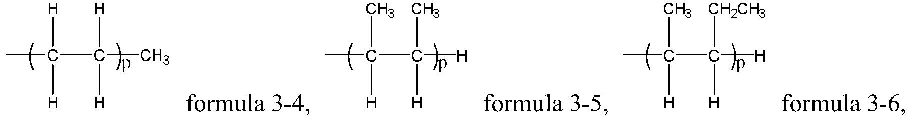

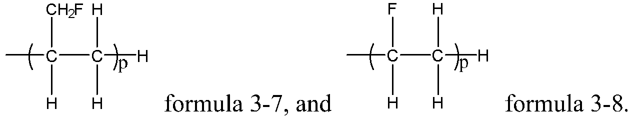

14. The battery cell according to any one of claims 7 to 13, wherein the substituted or unsubstituted C3 to C150 amide group comprises a structural formula represented by formula 4, 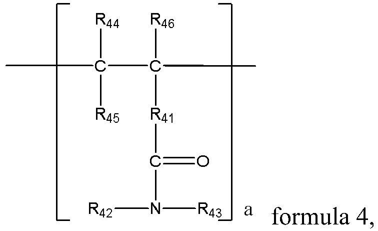
where in formula 4,
R₄₁ comprises at least one of a single bond and a substituted or unsubstituted C1 to C5 methylene group;
R₄₂ to R₄₆ each independently comprise at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group; and
a comprises any positive integer from 1 to 30.

15. The battery cell according to claim 14, wherein R₄₁ comprises a single bond, and the substituted or unsubstituted C3 to C150 amide group comprises a structural formula represented by formula 4-1,

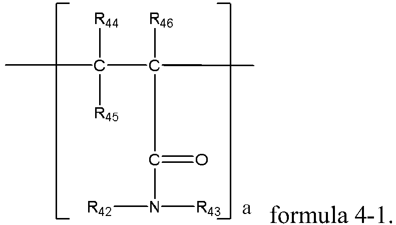

16. The battery cell according to claim 15, wherein the substituted or unsubstituted C3 to C150 amide group comprises at least one of structural formulas represented by formula 4-11 to formula 4-15, 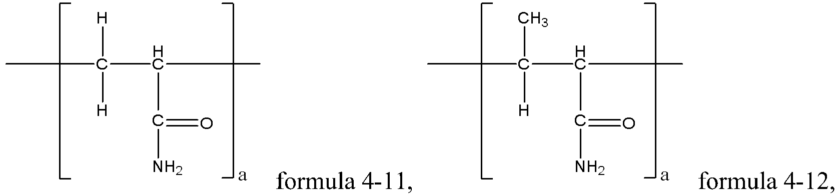 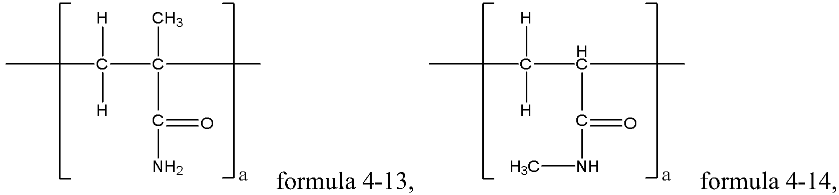 and

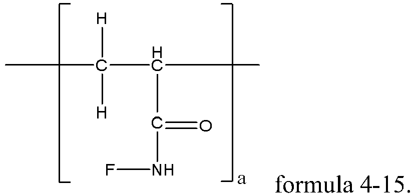

17. The battery cell according to claim 14, wherein R₄₁ comprises a substituted or unsubstituted C1 to C5 methylene group, and the substituted or unsubstituted C3 to C150 amide group comprises a structural formula represented by formula 4-2, 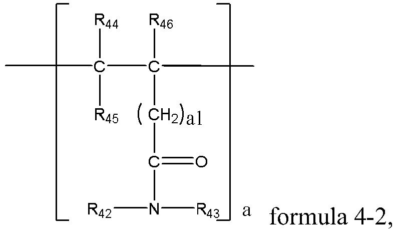 where a1 comprises any positive integer from 1 to 5.

18. The battery cell according to claim 17, wherein the substituted or unsubstituted C3 to C150 amide group comprises at least one of structural formulas represented by formula 4-21 to formula 4-24,

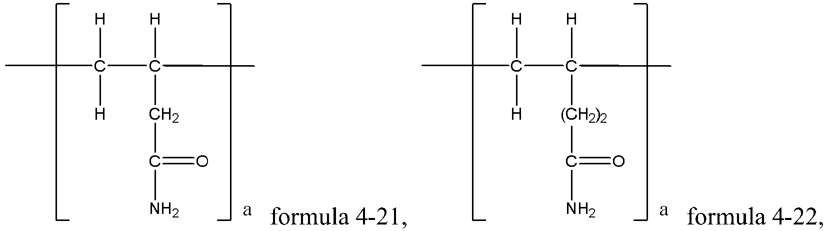

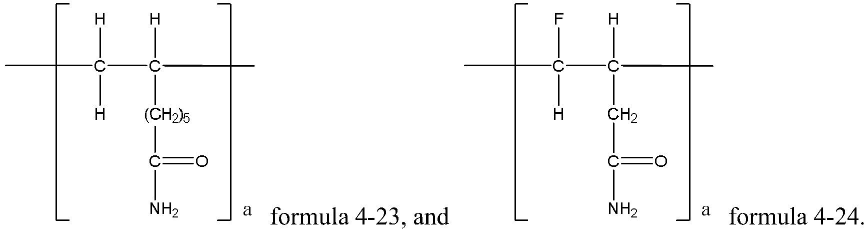

19. The battery cell according to any one of claims 7 to 18, wherein the substituted or unsubstituted C3 to C150 ester group comprises a structural formula represented by formula 5, 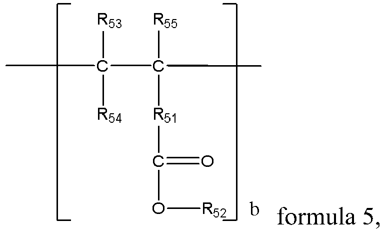
where in formula 5,
R₅₁ comprises at least one of a single bond and a substituted or unsubstituted C1 to C5 methylene group;
R₅₂ comprises a substituted or unsubstituted C1 to C5 alkyl group;
R₅₃ to R₅₅ each independently comprise at least one of a hydrogen atom, a halogen atom, a substituted or unsubstituted C1 to C10 alkyl group, a substituted or unsubstituted C2 to C10 alkenyl group, and a substituted or unsubstituted C2 to C10 alkynyl group; and
b comprises any positive integer from 1 to 30.

20. The battery cell according to claim 19, wherein R₅₁ comprises a single bond, and the substituted or unsubstituted C3 to C150 ester group comprises a structural formula represented by formula 5-1,

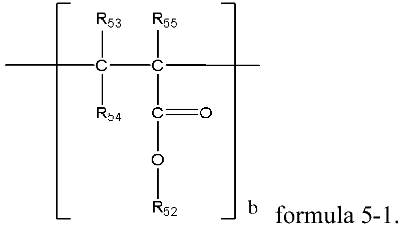

21. The battery cell according to claim 20, wherein the substituted or unsubstituted C3 to C150 ester group comprises at least one of structural formulas represented by formula 5-11 to formula 5-16,

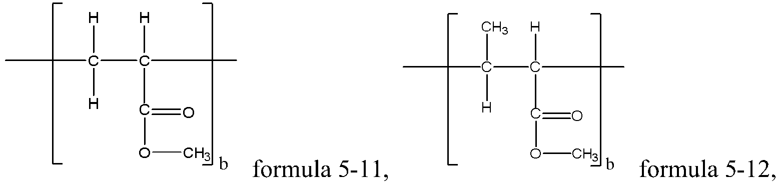

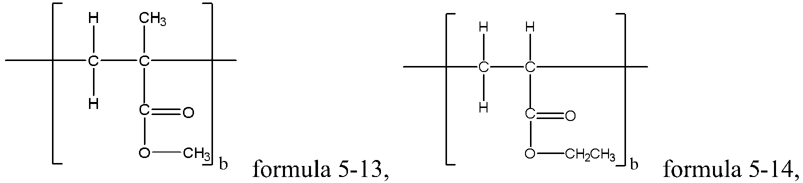

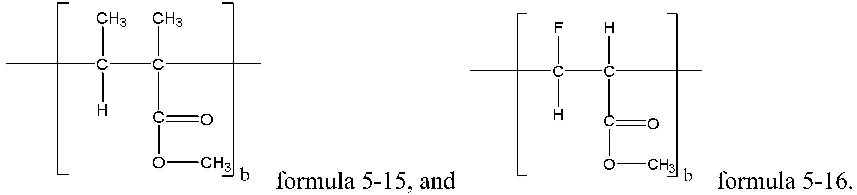

22. The battery cell according to claim 19, wherein R₅₁ comprises a substituted or unsubstituted C1 to C5 methylene group, and the substituted or unsubstituted C3 to C150 ester group comprises a structural formula represented by formula 5-2, 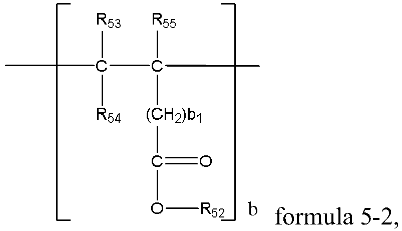 where b₁ comprises any positive integer from 1 to 5.

23. The battery cell according to claim 22, wherein the substituted or unsubstituted C3 to C150 ester group comprises at least one of structural formulas represented by formula 5-21 to formula 5-28,

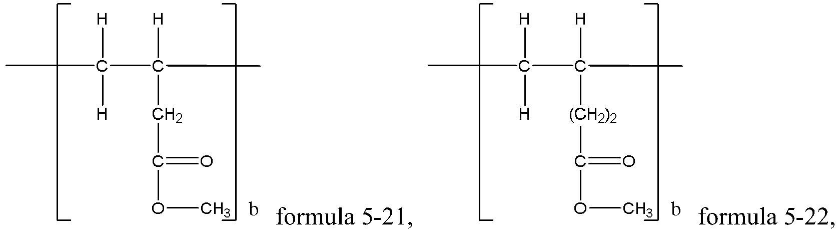

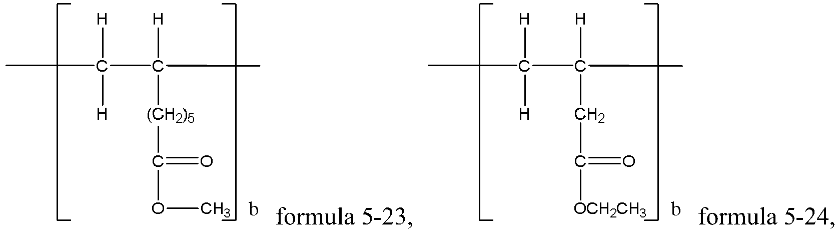

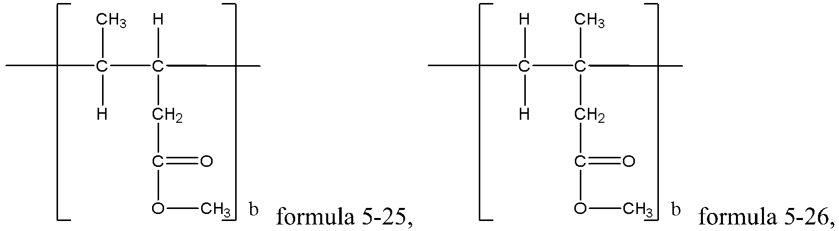

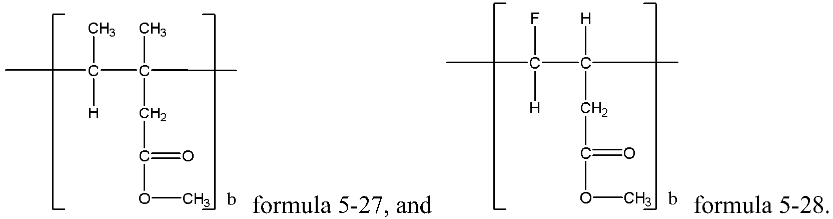

24. The battery cell according to any one of claims 1 to 23, wherein the negative electrode dispersant has a weight average molecular weight of 40 wDa to 80 wDa.

25. The battery cell according to any one of claims 1 to 24, wherein taking an elongation at break of a reference film made of sodium carboxymethyl cellulose as 100%, an elongation at break of a film made of the modified carboxymethyl cellulose salt is 200% to 300%, and the film made of the negative electrode dispersant and the reference film each have a width of 2.5 cm, a length of 5 cm, and a thickness of 1 mm.

26. The battery cell according to any one of claims 1 to 25, wherein based on a total mass of the negative electrode film layer, a mass content of the modified carboxymethyl cellulose salt is 0.8% to 1.3%.

27. The battery cell according to claim 26, wherein based on the total mass of the negative electrode film layer, the mass content of the modified carboxymethyl cellulose salt is 1.0% to 1.2%.

28. The battery cell according to any one of claims 1 to 27, wherein the negative electrode film layer has a coating weight of 190 mg/1540.25 mm² to 235 mg/1540.25 mm².

29. The battery cell according to claim 28, wherein the negative electrode film layer has a coating weight of 220 mg/1540.25 mm² to 235 mg/1540.25 mm².

30. A negative electrode dispersant, comprising a modified carboxymethyl cellulose salt, wherein the modified carboxymethyl cellulose salt comprises a conductive group and a flexible group, and the flexible group comprises at least one of a substituted or unsubstituted ether group, a substituted or unsubstituted alkyl group, a substituted or unsubstituted polyolefin group, a substituted or unsubstituted amide group, and a substituted or unsubstituted ester group.

31. The negative electrode dispersant according to claim 30, wherein the modified carboxymethyl cellulose salt comprises a compound represented by formula A, 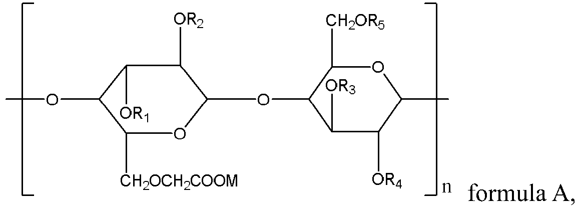
where in formula A,
M comprises at least one of a metal ion or NH₄⁺;
R₁ to R₅ each independently comprise a hydrogen atom, a conductive group, or a flexible group, at least one of R₁ to R₅ comprises a conductive group, and at least another one thereof comprises a flexible group; and
n comprises any positive integer from 1500 to 3000.

32. The negative electrode dispersant according to claim 30 or 31, wherein the conductive group comprises one or more of an aromatic polymer group and a polyalkynyl group.

33. The negative electrode dispersant according to claim 32, wherein the aromatic polymer group comprises one or more of a five-membered heterocyclic polymer group, an aromatic hydrocarbon derivative polymer group, and a polyindolyl group; and/or
the polyalkynyl group comprises one or more of a polyacetylenyl group and a polydiacetylenyl group.

34. The negative electrode dispersant according to claim 33, wherein the five-membered heterocyclic polymer group comprises one or more of a polypyrrolyl group, a polythiophene-based group, and a polyfuranyl group; and/or
the aromatic hydrocarbon derivative polymer group comprises one or more of a polyacenyl group, a polyphenylene group, a polyphenylenevinylene group, a polyaniline group, and an aniline tetramer group.

35. The negative electrode dispersant according to any one of claims 32 to 34, wherein the aromatic polymer group has a degree of polymerization of 2 to 50; and/or
the polyalkynyl group has a degree of polymerization of 2 to 50.

36. The negative electrode dispersant according to any one of claims 30 to 35, wherein the flexible group comprises at least one of a substituted or unsubstituted C3 to C150 ether group, a substituted or unsubstituted C3 to C150 alkyl group, a substituted or unsubstituted C3 to C150 polyolefin group, a substituted or unsubstituted C3 to C150 amide group, and a substituted or unsubstituted C3 to C150 ester group.

37. A modified carboxymethyl cellulose salt, comprising a conductive group and a flexible group, wherein the flexible group comprises at least one of a substituted or unsubstituted ether group, a substituted or unsubstituted alkyl group, a substituted or unsubstituted polyolefin group, a substituted or unsubstituted amide group, and a substituted or unsubstituted ester group.

38. A negative electrode sheet, comprising a negative electrode current collector and a negative electrode film layer provided on at least one surface of the negative electrode current collector, wherein the negative electrode film layer comprises the negative electrode dispersant according to any one of claims 30 to 36.

39. A battery, comprising the battery cell according to any one of claims 1 to 29.

40. An electric device, comprising the battery according to claim 39.
